# EUROPEAN PATENT APPLICATION

(11) **EP 4 468 642 A1**
(43) Date of publication of application: **27.11.2024**
(21) Application number: 24177705.1
(22) Date of filing: 23.05.2024
(51) Int. Cl.: H04L 5/00

(54) **IMPROVED TRANSMISSION CONFIGURATIONS FOR PHASE TRACKING REFERENCE SIGNALS (PTRS) ASSOCIATED WITH DEMODULATION REFERENCE SIGNAL (DMRS) PORTS MULTIPLEXED VIA TIME DOMAIN ORTHOGONAL COVER CODES (TD-OCC)**

(30) Priority: 23.05.2023 US 202363503880 P
(71) Applicant: Nokia Technologies Oy, 02610 Espoo (FI)
(72) Inventor: YUK, Youngsoo, 06275 SEOUL (KR); LUOTO, Petri, 90940 OULU (FI); KARJALAINEN, Juha Pekka, 88600 Sotkamo (FI)
(74) Representative: Script Intellectual Property LLP

(57) **Abstract**

Embodiments of the present disclosure provide a method for improved transmission configurations for phase tracking reference signals (PTRS) associated with demodulation reference signal (DMRS) ports multiplexed with one or more DMRS ports via time domain orthogonal cover codes (TD-OCC). The method includes receiving, from a network element, a first indication indicating whether transmission of a PTRS associated with a first DMRS port associated with a first DMRS is enabled in an apparatus, where the first DMRS port is multiplexed with one or more DMRS ports via TD-OCC. The method also includes determining, based at least in part on the first indication, that the apparatus is enabled to transmit the PTRS. The method also includes, in response to determining that the apparatus is enabled to transmit the PTRS, causing transmission of the PTRS to the network element.

## Description

### TECHNICAL FIELD

An example embodiment of the present disclosure generally relates to communication systems and, more particularly, to improved transmission configurations for transmitting phase tracking reference signals (PTRS) associated with demodulation reference signals (DMRS) ports that have been multiplexed via time domain orthogonal cover codes (TD-OCC).

### BACKGROUND

Third generation partnership project (3GPP) 5th generation (5G) technology is a next generation of radio systems and network architecture that can deliver extreme broadband and ultra-robust, low latency connectivity. 5G technology improves a variety of telecommunication services offered to the end users and supports massive broadband that delivers gigabytes of bandwidth per second on demand for the uplink and downlink transmissions. As one example, next generation communication systems may be configured to use virtualized radio access network (RAN) functions and core network functions. As another example, next generation systems may use a Service Based Architecture (SBA), e.g., a system architecture in which the system functionality is achieved using a set of Network Functions (NFs) providing services to other NFs authorized to access their services. The 5G network may be configured to support NFs via a Network Repository Function (NRF). For example, an NRF may be configured to maintain a list of available NFs to facilitate service registration and/or discovery in an instance in which a user equipment (UE) attempts to access one or more services provided by one or more network devices.

3GPP 5G communication systems employ a vast network of RAN nodes (e.g., Next Generation Node Bs, also known as gNBs) that generate respective networking cells to service one or more pieces of user equipment (UE) (e.g., mobile computing devices such as smartphones, laptops, etc.). In doing so, various reference signals are employed to enable reliable and efficient communication between a RAN node (e.g., a gNB) and user equipment (UE) on a physical channel. Such reference signals include, but are not limited to, demodulation reference signals (DMRSs) and phase tracking reference signals (PTRS).

The DMRS is often transmitted along with transmitted data to provide a reference signal, facilitating more accurate demodulation of the transmitted data. One way in which a transmitted DMRS enables a receiver to more accurately demodulate the transmitted data is by performing channel estimation. Channel estimation involves estimating the characteristics of the communication channel between the transmitter and receiver, such that the transmitted data may be decoded more accurately. The receiver uses the reference signal (e.g., DMRS) to estimate channel characteristics such as signal delay, amplitude shifting, phase shifts, speed/distance of the transmitter and receiver, and other anomalies. Enabling channel estimation using the DMRS is essential to enabling advanced 5G features such as beamforming, spatial multiplexing, multiple input multiple output (MIMO) communication, and communication on non-terrestrial networks (NTN).

The PTRS can be used to estimate and minimize the effect of common phase error (CPE) and inter-carrier interference (ICI) on network performance. In many contexts, transmission of the PTRS always occurs in combination with DMRS. A network element (e.g., a gNB) can configure the PTRS by issuing various indications (e.g., downlink control information (DCI) message related to a physical downlink shard channel (PDSCH)) to the UE. Accordingly, the network element (e.g., the gNB) can allocate network resources for the UE by explicitly configuring time-frequency resources related to the network, the network element (e.g., the gNB), and/or the UE to facilitate the error-free transmission and/or receipt of data by using PTRS in conjunction with DMRS.

However, as the 3GPP continues to develop network standards and agreements related to the full capacities of networking technology, various procedural conflicts can occur with regard to network communication protocols and, as will be described herein, various specification conflicts can impact the utilization of reference signals (e.g., DMRS and PTRS) and therefore the quality of the data transmissions. It is therefore desirable to have improved methods for efficiently configuring the data transmissions between a network elements (e.g., gNBs) and UEs associated with a particular 3GPP communication system.

### SUMMARY

Methods, apparatuses, and computer program products are provided in accordance with an example embodiment for improved transmission configurations for phase tracking reference signals (PTRS) associated with DMRS ports multiplexed via time domain orthogonal cover codes (TD-OCC).

In accordance with a first aspect of the present disclosure, a computer-implemented method for providing improved transmission configurations for PTRS associated with DMRS ports multiplexed via TD-OCC for a user equipment (UE) is provided. The computer-implemented method is performable by one or more specially configured computing device(s) embodied in hardware, software, firmware, and/or any combination thereof, for example as described herein. In one example embodiment, a computer-implemented method includes receiving, from a network element, a first indication indicating whether transmission of a phase tracking reference signal (PTRS) associated with a first demodulation reference signal (DMRS) port associated with a first DMRS is enabled for a user equipment (UE), wherein the first DMRS port is multiplexed with one or more DMRS ports via TD-OCC. The computer-implemented method also includes determining, based at least in part on the first indication, that the apparatus is enabled to transmit the PTRS. The computer-implemented method also includes, in response to determining that the apparatus is enabled to transmit the PTRS, causing transmission of the PTRS to the network element.

The computer-implemented method further includes determining, based at least in part on the first indication, that the apparatus is not enabled to transmit the PTRS. The computer-implemented method also includes, in response to determining that the apparatus is not enabled to transmit the PTRS, disabling transmission of the PTRS to the network element.

The computer-implemented method further includes receiving, from the network element, a second indication indicating whether the apparatus is enabled to transmit the PTRS. The computer-implemented method also includes determining, based at least in part on the second indication, that the apparatus is enabled to transmit the PTRS. The computer-implemented method also includes, in response to determining that the apparatus is enabled to transmit the PTRS, causing transmission of the PTRS to the network element.

The computer-implemented method further includes determining, based at least in part on the second indication, that the apparatus is not enabled to transmit the PTRS. The computer-implemented method also includes, in response to determining that the apparatus is not enabled to transmit the PTRS, disabling transmission of the PTRS to the network element.

The computer-implemented method further includes determining whether a transmission rank associated with the apparatus satisfies a transmission rank threshold. The computer-implemented method also includes, in response to determining that the transmission rank associated with the apparatus satisfies the transmission rank threshold, transmitting, to the network element, capability information related to a respective rank of one or more physical uplink shared channel (PUSCH) transmissions from the apparatus.

The computer-implemented method further includes where the PTRS is transmitted via one or more first OFDM symbols, and where the DMRS is associated with one or more second OFDM symbols that are different than the one or more first OFDM symbols.

The computer-implemented method further includes updating, based at least in part on the first indication, one or more PTRS configuration parameters associated with the apparatus, where the one or more PTRS configuration parameters comprise one or more portions of data associated with at least one of DMRS symbol structure information, DMRS port allocation information, subcarrier frequency information, OFDM symbol allocation information related to the DMRS, OFDM symbol allocation information related to the PTRS, or information indicating whether the apparatus is enabled to cause transmission of the PTRS.

The computer-implemented method further includes where at least one of the first indication or the second indication are obtained from the network element via at least one of a radio resource control (RRC) signaling message, a medium access control (MAC) control element (CE), or a downlink control information (DCI) message.

In accordance with a second aspect of the disclosure, another computer-implemented method for providing improved transmission configurations for PTRS associated with DMRS ports multiplexed via TD-OCC for a user equipment (UE) is provided. The computer-implemented method is performable by one or more specially configured computing device(s) embodied in hardware, software, firmware, and/or any combination thereof, for example as described herein. In one example embodiment, a computer-implemented method includes receiving, from a network element, an indication indicating whether transmission of a phase tracking reference signal (PTRS) associated with a first demodulation reference signal (DMRS) port associated with a first DMRS is enabled in the UE. The computer-implemented method also includes determining, based on the indication, a transmission rank associated with the apparatus, where the transmission rank is associated with one or more active transmission layers associated with the apparatus, and where the one or more active transmission layers are associated with one or more respective antenna ports associated with the apparatus. The computer-implemented method also includes determining a DMRS configuration type related to the first DMRS. The computer-implemented method also includes determining whether the first DMRS is associated with a single orthogonal frequency-division multiplexing (OFDM) symbol DMRS structure or a double OFDM symbol DMRS structure. The computer-implemented method also includes determining whether the first DMRS port has been multiplexed with one or more DMRS ports via TD-OCC.

The computer-implemented method further includes, in response to determining that the transmission rank satisfies a predefined transmission rank threshold, in response to determining that the DMRS configuration type is an eType-1 DMRS configuration type or an eType-2 DMRS configuration type, in response to determining that the first DMRS is associated with a single OFDM symbol DMRS structure and, in response to determining that the first DMRS port has not been multiplexed via TD-OCC, causing transmission of the PTRS to the network element.

The computer-implemented method further includes, in response to determining that the transmission rank satisfies a predefined transmission rank threshold, in response to determining that the DMRS configuration type is a Type-2 DMRS configuration type, in response to determining that the first DMRS is associated with a single OFDM symbol DMRS structure and, in response to determining that the first DMRS port has not been multiplexed via TD-OCC, causing transmission of the PTRS to the network element.

The computer-implemented method further includes, in response to determining that the transmission rank satisfies a predefined transmission rank threshold, in response to determining that the DMRS configuration type is a Type-1 DMRS configuration type or a Type-2 DMRS configuration type, in response to determining that the first DMRS is associated with a double OFDM symbol DMRS structure and, in response to determining that the first DMRS port has not been multiplexed via TD-OCC, causing transmission of the PTRS to the network element.

In accordance with a third aspect of the disclosure, a computer-implemented method for providing a computer-implemented method for providing improved transmission configurations for PTRS associated with DMRS ports multiplexed with one or more DRMS ports via TD-OCC for a network element is provided. The computer-implemented method is performable by one or more specially configured computing device(s) embodied in hardware, software, firmware, and/or any combination thereof, for example as described herein. In one example embodiment, a computer-implemented method includes generating a first indication indicating whether transmission of a PTRS associated with a DMRS port associated with a DMRS is enabled for a UE, where the DMRS port is multiplexed with one or more DMRS ports via time domain orthogonal cover codes (TD-OCC). The computer-implemented method further includes causing transmission of the first indication to the UE.

The computer-implemented method further includes generating a second indication indicating whether the UE is enabled to transmit the PTRS. The computer-implemented method also includes causing transmission of the second indication to the UE.

The computer-implemented method further includes, where at least one of the first indication or the second indication indicate that the UE is enabled to transmit the PTRS.

The computer-implemented method further includes, where at least one of the first indication or the second indication indicate that the UE is not enabled to transmit the PTRS.

The computer-implemented method further includes, where at least one of the first indication or the second indication comprise one or more PTRS configuration parameters, and where the one or more PTRS configuration parameters comprise one or more portions of data associated with at least one of DMRS symbol structure information, DMRS port allocation information, subcarrier frequency information, OFDM symbol allocation information related to the DMRS, OFDM symbol allocation information related to the PTRS, or information indicating whether the apparatus is enabled to cause transmission of the PTRS.

The computer-implemented method further includes receiving capability information related to a respective rank of one or more physical uplink shared channel (PUSCH) transmissions from the UE, where the capability information is received in response to a determination that a transmission rank associated with the UE satisfies a transmission rank threshold.

In accordance with a fourth aspect of the disclosure, an apparatus for providing improved transmission configurations for PTRS associated with DMRS ports multiplexed via TD-OCC is provided. In one example embodiment, the apparatus includes at least one or more transceivers and at least one or more processors communicatively coupled to the one or more transceivers. The one or more processors are configured to cause the apparatus to perform any one of the example computer-implemented methods described herein.

In accordance with a fifth aspect of the disclosure, a computer program product for providing improved transmission configurations for PTRS associated with DMRS ports multiplexed via TD-OCC is provided. In one example embodiment, the computer program product includes at least one non-transitory computer-readable storage medium having computer program code instructions stored thereon that, in execution with at least one processor, configures the computer program product for performing any one of the example computer-implemented methods described herein.

In accordance with a sixth aspect of the disclosure, an apparatus for providing improved transmission configurations for PTRS associated with DMRS ports multiplexed via TD-OCC is provided. The apparatus includes means for receiving, from a network element, a first indication indicating whether transmission of a PTRS associated with a first DMRS port associated with a first DMRS is enabled in the apparatus, where the first DMRS port is multiplexed with one or more DMRS ports via TD-OCC. The apparatus further includes means for determining, based at least in part on the first indication, that the apparatus is enabled to transmit the PTRS. The apparatus further includes means for, in response to determining that the apparatus is enabled to transmit the PTRS, causing transmission of the PTRS to the network element.

The apparatus further includes means for determining, based at least in part on the first indication, that the apparatus is not enabled to transmit the PTRS. The apparatus further includes means for, in response to determining that the apparatus is not enabled to transmit the PTRS, disabling transmission of the PTRS to the network element.

The apparatus further includes means for receiving, from the network element, a second indication indicating whether the apparatus is enabled to transmit the PTRS. The apparatus further includes means for determining, based at least in part on the second indication, that the apparatus is enabled to transmit the PTRS. The apparatus further includes means for, in response to determining that the apparatus is enabled to transmit the PTRS, causing transmission of the PTRS to the network element.

The apparatus further includes means for determining, based at least in part on the second indication, that the apparatus is not enabled to transmit the PTRS. The apparatus further includes means for, in response to determining that the apparatus is not enabled to transmit the PTRS, disabling transmission of the PTRS to the network element.

The apparatus further includes means for determining whether a transmission rank associated with the apparatus satisfies a transmission rank threshold. The apparatus further includes means for, in response to determining that the transmission rank associated with the apparatus satisfies the transmission rank threshold, transmitting, to the network element, capability information related to a respective rank of one or more physical uplink shared channel (PUSCH) transmissions from the apparatus.

The apparatus further includes means for where the PTRS is transmitted via one or more first OFDM symbols, and where the DMRS is associated with one or more second OFDM symbols that are different than the one or more first OFDM symbols.

The apparatus further includes means for configure updating, based at least in part on the first indication, one or more PTRS configuration parameters associated with the apparatus where the one or more PTRS configuration parameters comprise one or more portions of data associated with at least one of DMRS symbol structure information, DMRS port allocation information, subcarrier frequency information, OFDM symbol allocation information related to the DMRS, OFDM symbol allocation information related to the PTRS, or information indicating whether the apparatus is enabled to cause transmission of the PTRS.

The apparatus further includes means for where at least one of the first indication or the second indication are obtained from the network element via at least one of a radio resource control (RRC) signaling message, a medium access control (MAC) control element (CE), or a downlink control information (DCI) message.

In accordance with a seventh aspect of the disclosure, another apparatus for providing improved transmission configurations for PTRS associated with DMRS ports multiplexed via TD-OCC is provided. The apparatus includes means for receiving, from a network element, an indication indicating whether transmission of a PTRS associated with a first DMRS port associated with a first DMRS is enabled for the apparatus. The apparatus further includes means for determining, based on the indication, a transmission rank associated with the apparatus, where the transmission rank is associated with one or more active transmission layers associated with the apparatus, and where the one or more active transmission layers are associated with one or more respective antenna ports associated with the apparatus. The apparatus further includes means for determining a DMRS configuration type related to the first DMRS. The apparatus further includes means for determining whether the first DMRS is associated with a single OFDM symbol DMRS structure or a double OFDM symbol DMRS structure. The apparatus further includes means for determining whether the first DMRS port has been multiplexed via TD-OCC.

The apparatus further includes means for, in response to determining that the transmission rank satisfies a predefined transmission rank threshold, in response to determining that the DMRS configuration type is an eType-1 DMRS configuration type or an eType-2 DMRS configuration type, in response to determining that the first DMRS is associated with a single OFDM symbol DMRS structure and, in response to determining that the first DMRS port has not been multiplexed via TD-OCC, causing transmission of the PTRS to the network element.

The apparatus further includes means for, in response to determining that the transmission rank satisfies a predefined transmission rank threshold, in response to determining that the DMRS configuration type is a Type-2 DMRS configuration type, in response to determining that the first DMRS is associated with a single OFDM symbol DMRS structure and, in response to determining that the first DMRS port has not been multiplexed via TD-OCC, causing transmission of the PTRS to the network element.

The apparatus further includes means for, in response to determining that the transmission rank satisfies a predefined transmission rank threshold, in response to determining that the DMRS configuration type is a Type-1 DMRS configuration type or a Type-2 DMRS configuration type, in response to determining that the first DMRS is associated with a double OFDM symbol DMRS structure and, in response to determining that the first DMRS port has not been multiplexed via TD-OCC, causing transmission of the PTRS to the network element.

In accordance with an eighth aspect of the disclosure, another apparatus for providing improved transmission configurations for PTRS associated with DMRS ports multiplexed with one or more DMRS ports via TD-OCC is provided. The apparatus includes means for generating a first indication indicating whether transmission of a PTRS associated with a DMRS port associated with a DMRS is enable for a UE, where the DMRS port is multiplexed with one or more DMRS ports via TD-OCC. The apparatus further includes means for causing transmission of the first indication to the UE.

The apparatus further includes means for generating a second indication indicating whether the UE is enabled to transmit the PTRS. The apparatus further includes means for causing transmission of the second indication to the UE.

The apparatus further includes where at least one of the first indication or the second indication indicate that the UE is enabled to transmit the PTRS.

The apparatus includes where at least one of the first indication or the second indication indicate that the UE is not enabled to transmit the PTRS.

The apparatus further includes where at least one of the first indication or the second indication comprise one or more PTRS configuration parameters, and where the one or more PTRS configuration parameters comprise one or more portions of data associated with at least one of DMRS symbol structure information, DMRS port allocation information, subcarrier frequency information, OFDM symbol allocation information related to the DMRS, OFDM symbol allocation information related to the PTRS, or information indicating whether the apparatus is enabled to cause transmission of the PTRS.

The apparatus further includes means for receiving capability information related to a respective rank of one or more physical uplink shared channel (PUSCH) transmissions from the UE, where the capability information is received in response to a determination that a transmission rank associated with the UE satisfies a transmission rank threshold.

### BRIEF DESCRIPTION OF THE DRAWINGS

Having thus described certain example embodiments in general terms, reference will now be made to the accompanying drawings, which are not necessarily drawn to scale, and wherein:
FIG. 1 is a block diagram of a communication system configured in accordance with one or more example embodiments of the present disclosure;
FIG. 2 is a block diagram of an apparatus that can be configured for improved transmission configurations for phase tracking reference signals (PTRS) associated with DMRS ports multiplexed via time domain orthogonal cover codes (TD-OCC) in accordance with one or more example embodiments of the present disclosure;
FIG(s). 3A-H illustrate various demodulation reference signal (DMRS) ports in various transmission configurations in accordance with one or more example embodiments of the present disclosure;
FIG. 4 illustrates a physical uplink shared channel (PUSCH) configuration element in accordance with one or more example embodiments of the present disclosure;
FIG. 5 illustrates a flowchart diagram depicting a method for improved transmission configurations for PTRSs associated with DMRS ports multiplexed via TD-OCC for a user equipment (UE) in accordance with one or more example embodiments of the present disclosure;
FIG. 6 illustrates a flowchart diagram depicting a method for improved transmission configurations for PTRSs associated with DMRS ports multiplexed via TD-OCC for a UE in accordance with one or more example embodiments of the present disclosure; and
FIG. 7 illustrates a flowchart depicting a method for improved transmission configurations for PTRSs associated with DMRS ports multiplexed via TD-OCC for a network element in accordance with one or more example embodiments of the present disclosure.

### DETAILED DESCRIPTION

Some embodiments of the present disclosure will now be described more fully hereinafter with reference to the accompanying drawings, in which some, but not all, embodiments of the present disclosure are shown. Indeed, various embodiments of the present disclosure may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present disclosure. Thus, use of any such terms should not be taken to limit the spirit and scope of embodiments of the present disclosure.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As defined herein, a "computer-readable storage medium," which refers to a physical storage medium (e.g., volatile, or non-volatile memory device), may be differentiated from a "computer-readable transmission medium," which refers to an electromagnetic signal.

Additionally, as used herein, the terms "source cell," "serving cell" and/or "LTM serving cell" are used interchangeably to indicate a network cell associated with a respective RAN node (e.g., a gNB) that a UE is currently connected to. Similarly, as used herein, the terms "candidate cell," "target cell," and/or "LTM candidate cell" are used interchangeably to indicate a network cell associated with a respective RAN node (e.g., a gNB) that a UE can potentially connect to. Furthermore, as described herein, various transmissions (e.g., PRACH transmissions) are generally described as being transmitted to a particular cell (e.g., a serving cell, candidate cell, and/or the like). It will be appreciated that transmitting data to the particular cell can be understood to mean transmitting data to any one of one or more networking elements, network nodes (e.g., RAN nodes, gNBs, etc.), and/or any other manner of computing device capable of generating, augmenting, maintaining, managing, and/or otherwise integrating with the particular cell for purposes of facilitating communication via a communications network (e.g., a 5G network) associated with the particular cell.

It should be understood that the present disclosure is not limited to the particular types of communication systems and/or processes disclosed. For example, although illustrated in the context of wireless cellular systems utilizing 3GPP system elements such as a 3GPP next generation core network, the disclosed embodiments can be adapted in a straightforward manner to a variety of other types of communication systems. Additionally, while the present disclosure may describe certain embodiments in conjunction with a 5G communications system, other embodiments also apply to and comprise other networks and network technologies, such as 3G, 4G, Long Term Evolution (LTE), 6G, etc., without limitation.

In accordance with an illustrative embodiment implemented in a 5G communication system environment, one or more 3GPP standards, specifications, and/or protocols provide further explanation of user equipment (UE) and core network elements/entities/functions and/or operations performed by the UE and the core network elements/entities/functions, e.g., the 3GPP System Aspects (SA) Working Group 5 (3GPP SA5), the 3GPP RAN 3. Other 3GPP standards, specifications and/or protocols provide other conventional details that one of ordinary skill in the art will realize. However, while illustrative embodiments are well-suited for implementation associated with the above-mentioned 3GPP standards, alternative embodiments are not necessarily intended to be limited to any particular standards.

Embodiments of the present disclosure generally relate to improved transmission configurations for transmitting phase tracking reference signals (PTRS) associated with demodulation reference signals (DMRS) ports that have been multiplexed via time domain orthogonal cover codes (TD-OCC) for new radio (NR) network communications. Specifically, various embodiments of the present disclosure provide methods to remove, augment, and/or bypass various PTRS transmission restrictions that have been imposed by various conflicting network specification standards associated with the 3GPP.

The term "antenna port" is used by the 3GPP to denote a logical instance that may not directly correspond to a physical antenna associated with a UE or a network element (e.g., a gNB). It can be understood that multiple signals are transmitted from the same antenna port if the signals are mapped to the same set of physical antennas associated with the same logical antenna port.

The term "DMRS port" is used herein to refer to a logical port instance associated with an antenna port, where the DMRS port comprises data related to a DMRS and/or a PTRS being used by a UE and/or a network element (e.g., gNB). As such, a DMRS port is used to estimate the channel of the corresponding antenna port. In 5G New Radio (NR), orthogonal cover codes (OCCs) are utilized to ensure the orthogonality of data transmissions related to respective subcarrier frequencies and/or predefined durations of time. A channel estimation algorithm in the receiver can generate one estimate for every set of time-frequency resources over which an OCC is spread. According to 3GPP specifications, various multiplexing techniques can be employed to ensure orthogonality across all DMRS ports such as, for example, Frequency Domain-Code Division Multiplexing (FD-CDM), and/or Time Domain-Code Division Multiplexing (TD-CDM), and/or frequency orthogonal subcarriers. In various contexts, the DMRS to antenna port mapping can be indicated by downlink control information (DCI) messages transmitted to a UE from a network element (e.g., the gNB).

As described herein, a DMRS and a PTRS are references signals associated with a physical downlink shared channel (PDSCH) and/or or a physical uplink shared channel (PUSCH) that carry various data (e.g., end user data) to/from a UE and/or a network element (e.g., a gNB). A DMRS is used to estimate a radio channel associated with a particular UE and a network element (e.g. a gNB) as part of the coherent demodulation of PDSCH and/or PUSCH.

PTRS was introduced in 5G NR to enable compensation of oscillator phase noise, which increases as a function of an oscillator carrier frequency (e.g., related to a local oscillator (LO) associated with a respective UE or network element). A PTRS can be utilized at high carrier frequencies (e.g., millimeter (mm) -wave frequencies) to mitigate phase noise such as common phase error (CPE) and inter-carrier interference (ICI). CPE can impact the quality of a transmission signal caused by phase noise resulting from an identical phase rotation of a received orthogonal frequency-division multiplexing (OFDM) symbol in all the subcarriers associated with particular group of network resources (e.g., a physical resource block (PRB)). ICI can lead to a loss of orthogonality between the subcarriers. Examples of the types of signals impacted by CPE and ICI include, but are not limited to, OFDM carrier signals associated with PUSCH transmissions, PDSCH transmissions, and/or the like. PTRSs have a low density in the frequency domain (FD) and high density in the time domain (TD). As such, in most contexts, the phase rotation produced by CPE is identical for all subcarriers within an OFDM symbol, where the OFDM symbol can be understood as a signal transmission instance corresponding to a predefined duration of time in the TD that is associated with the subcarriers of a particular resource grid related to a PRB. However, in most contexts, there is a low correlation of phase noise across the OFDM symbols associated with the resource grid. In some contexts, the PTRS is specific for a particular UE and confined in a scheduled resource.

In various contexts, a DMRS may be transmitted via one or more corresponding DMRS ports. The DMRS port may be among a set of DMRS ports used for performing a channel estimate of a radio channel and/or demodulating a radio channel as a data channel at a receiving side of the radio channel (e.g., at the UE). A particular DMRS port is associated with a respective resource grid related to a respective antenna port. In various embodiments, a resource grid is associated with a physical resource block (PRB) associated with physical network resources (e.g., a 5G antenna array) and comprises a predefined number of subcarriers on a frequency axis where, when concatenated, the subcarriers represent a full carrier frequency bandwidth in the frequency domain. Additionally, a resource grid comprises a predefined number of OFDM symbols where, when concatenated, the OFDM symbols represent one subframe in the time domain. An OFDM symbol can be understood as a predefined duration of time in the time domain (TD) that is associated with the subcarriers of a particular resource grid.

Each respective subcarrier allocated to the DMRS may be uniquely identified by an index associated with one or more DMRS ports related to a respective resource grid. A radio channel may be accessed through the one or more DMRS ports and one or more transmissions of the DMRS may be associated with one of the one or more respective DMRS ports. Each of the one or more DMRS ports may be uniquely identified by a DMRS port index and each transmission of the DMRS can be associated with the DMRS port index. The one or more DMRS ports may be located at (or may define) a transmitting side of the radio channel (e.g., a UE). In some contexts, the one or more DMRS ports may be used by a RAN node for a downlink (DL) transmission. In some contexts, the one or more DMRS ports can be used by a UE for an uplink (UL) transmission. In some contexts, the one or more DMRS ports can be located at (or may define) a receiving side of the radio channel. In some contexts, the one or more DMRS ports may be used by the RAN node for a UL reception. In some contexts, the one or more DMRS ports may be used by the UE for a DL transmission.

A transmission over a radio channel may comprise one or more active transmission layers (also referred to as spatial streams). The number of active transmission layers may be equal to the number of DMRS ports used for the transmission over the radio channel. In some contexts, the radio channel may be a multiple-input multiple-output (MIMO) channel being accessed through the DMRS ports at the transmitting side (i.e., the input of the MIMO channel), mapped to a plurality of transmitter antennas, and being received through a plurality of receiver-ports formed by antennas at a receiver side (i.e., the output of the MIMO channel). The DMRS may be used for at least one of precoding at the transmitting side or demodulating the radio channel at the receiving side.

In some contexts, a different DMRS may be transmitted through each of the DMRS ports. The DMRSs transmitted through different DMRS ports may be differentiated by at least one of an orthogonal cover code (OCC) in the frequency domain (FD-OCC), an OCC in the time domain (TD-OCC), and the subset of subcarriers allocated to the DMRS. For example, each of the DMRSs transmitted through different DMRS ports may either use disjoint subsets of subcarriers or be orthogonally coded in the FD. One of the DMRS ports may be associated with a PTRS. The PTRS may be transmitted through the DMRS port associated with the PTRS. The PTRS may be transmitted on the subcarrier that is allocated to the PTRS among the subset of subcarriers allocated to the DMRS transmitted though the one DMRS port. The PTRS and the DMRS may be transmitted simultaneously or separately (e.g., in OFDM symbols or different PRBs, i.e., different slots or transmission time intervals, TTIs). Furthermore, in some contexts the transmission of the PTRS and the transmission of the DMRS may overlap.

A transmission duration of the PTRS may be longer than a transmission duration of the DMRS. For example, in some contexts, the PTRS may be transmitted for a duration of time corresponding to 14 OFDM symbols while the DMRS may be transmitted for a duration of time corresponding to one or two OFDM symbols. In some contexts, a DMRS transmitted through a respective DMRS port may be multiplexed via a TD-OCC and the subcarrier allocated to the PTRS may be determined among a subset of subcarriers allocated to the DMRS based on a DMRS port dependency incurred by the TD-OCC multiplexing of the DMRS. In some circumstances, based on one or more 3GPP standards and/or agreements, the PTRS is not scheduled when using TD-OCC to multiplex the DMRS. In such circumstances, the PTRS is not transmitted when using DMRS ports 4 to 7 for DMRS configuration type 1 and ports 6 to 11 for DMRS configuration Type-2.

Regarding the mapping of the PTRS in the frequency domain (e.g., among subcarriers of a respective DMRS port), the 3GPP agreed that each PTRS port is to be scheduled with at most one (1) subcarrier per PRB (e.g., per the PRB associated with a resource grid related to the respective DMRS port). Furthermore, it was agreed that a subcarrier used for a PTRS port must be one of the subcarriers also used for the DMRS port associated with the PTRS port. In order to make the *PTRS-RE-offset* signaling compatible with the cases where TD-OCC applied to the DMRS together with PTRS is used (e.g., ports 4-7 for DMRS configuration Type-1 and ports 6-7 for DMRS configuration Type-2 for sub-6 GHz transmission scenarios), a function for determining the relative port index is provided. The function may be implemented to generate the relative port index for the DMRS ports without TD-OCC.

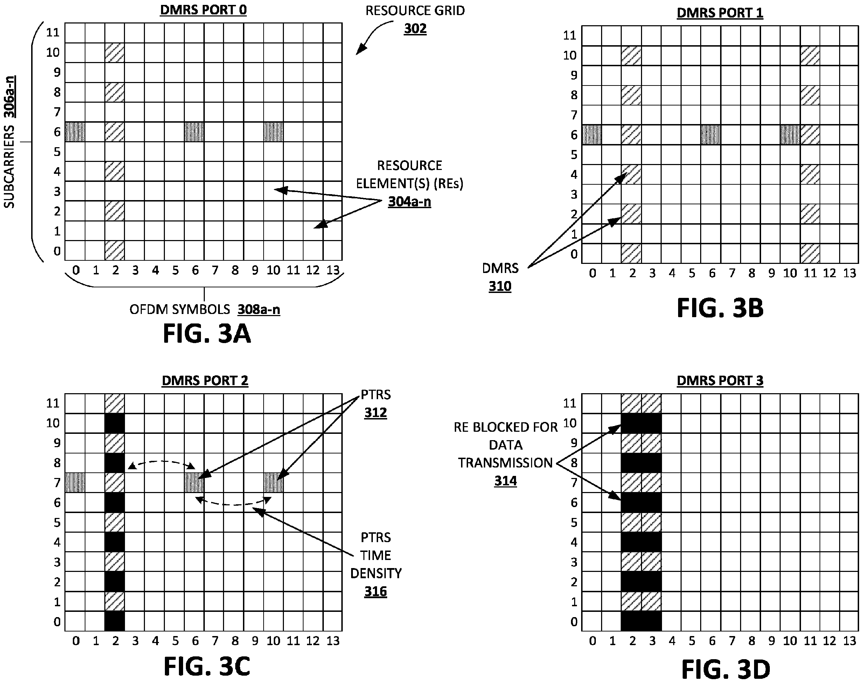

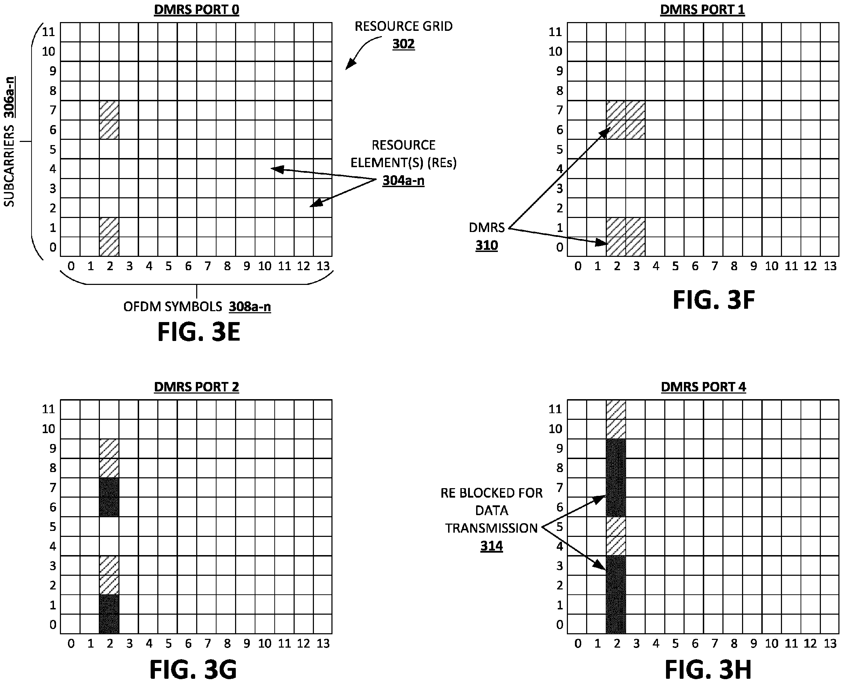

In order for DMRS to support eight-layer transmission, a total of eight antenna ports defined from ports 1 to 14 are defined. As shown in FIG. 3D, a double OFDM symbol DMRS may have a basic structure using a pattern in which a single OFDM symbol DMRS is repeated. However, the double OFDM symbol DMRS is different from the single OFDM symbol DMRS with respect to which method is applied for spreading in the time domain. For example, for TD-OCC = {(1, 1)}, a simple repetition pattern is used, and thus the number of supported DMRS ports does not increase. However, since two orthogonal codes can be additionally used where TD-OCC = {(1, 1), (1, -1)}, the maximum number of supported DMRS ports may increase by a factor of two. In such contexts, the UE may receive respective DMRS port allocation information through a downlink control information (DCI) transmission of PDCCH .

The DMRS configuration type indicates the frequency density of the DMRS and is signaled by the RRC. For example, as shown in FIG(s). 3A-D, the DMRS Configuration Type-1 defines six (6) subcarriers per PRB per antenna port (e.g., per DMRS port), and comprises alternate subcarriers. As shown in FIG(s). 3E-H, the DMRS Configuration Type-2 defines four (4) subcarriers per PRB per antenna port (e.g., per DMRS port), and consists of two groups of two consecutive subcarriers.

Different delta shifts are applied to the sets of subcarriers used depending on the associated DMRS port or code division multiplexing (CDM) group. A CDM group can be understood as a set of time-frequency resources. For DMRS configuration Type-1, there are two possible CDM groups/shifts across eight possible antenna ports (e.g., DMRS ports 0-7) that are composed of alternating subcarriers. FIG(s). 3A and 3C illustrate the different shifts associated for DMRS subcarrier locations with the DMRS configuration type configured as Type-1. As shown by FIG(s). 3A and 3C, the resource elements (REs) 304a-n corresponding to the DMRS subcarrier locations of a lower CDM group (e.g., the REs 304a-n associated with DMRS port 0 depicted by FIG. 3A) are blocked for data transmission in the DMRS ports of higher a CDM group (e.g., as shown by the REs blocked for data transmission 314 associated with DMRS port 2 and 3).

For DMRS configuration Type-2, there are three possible CDM groups/shifts across twelve antenna ports (e.g., DMRS ports 0-7) each of which is composes of two sets of two consecutive subcarriers. FIG(s). 3E-H illustrate the different shifts associated with DMRS subcarrier locations for DMRS configuration Type-2. As shown by FIG(s). 3G and 3H the REs 304a-n corresponding to the DMRS subcarrier locations of lower CDM groups are blocked for data transmission in the antenna ports of higher CDM groups. For example, the REs 304a-n associated with DMRS port 0 depicted by FIG. 3E are blocked for data transmission in the DMRS ports of higher a CDM group (e.g., as shown by the REs blocked for data transmission 314 associated with DMRS port 2 and 4).

According to current 3GPP standards and agreements (e.g., agreements related to 3GPP Rel-18), new DMRS types (eType1/eType2) have been introduced which support two times more DMRS ports by applying FD-OCC4 instead of FD-OCC2. Furthermore, 3GPP Rel-18 comprises agreements that support 8-TX transmission (e.g., simultaneous data transmission via eight (8) active transmission layers). In 3GPP Rel-15, the PTRS was introduced for phase/frequency offset estimation purposes, and it was agreed that the PTRS can be transmitted in a particular subcarrier in consecutive symbols in the same subcarrier locations associated with one or more DMRS ports. However, there are restrictions imposed when using PTRS in conjunction with a double OFDM symbol DMRS.

It has been agreed (e.g., as disclosed in 3GPP RAN1#90bis) that a UE is not expected to be configured/scheduled with a PTRS and a DMRS that has been multiplexed via TD-OCC in the same slot (e.g., a time slot associated with a subframe composed of OFDM symbols) in transmission contexts related to frequencies above six (6) GHz. As such, the 3GPP standards do not permit a PTRS to be transmitted when the associated DMRS is multiplexed with the other DMRS ports via TD-OCC. For example, 3GPP TS 38.214 defines that a UE is not allowed to be configured simultaneously with a PTRS in UL DMRS ports 4-7 or UL DMRS ports 6-11 with a *maxLength* = 2 for DMRS Type-1 or DMRS Type-2. If a UE transmitting PUSCH scheduled by DCI format 0_2 is configured with the higher layer transmission parameter *phaseTrackingRS* in *dmrs-UplinkForPUSCH-MappingTypeA-DCI-0-2* or *dmrs-UplinkForPUSCH-MappingTypeB-DCI-0-2,* or a UE transmitting PUSCH scheduled by DCI format 0_0 or DCI format 0_1 is configured with the higher layer transmission parameter *phaseTrackingRS* in *dmrs-UplinkForPUSCH-MappingTypeA* or *dmrs-UplinkForPUSCH-MappingTypeB,* the UE may assume that the following configurations are not occurring simultaneously for the transmitted PUSCH: any DMRS ports among DMRS ports 4-7 for DMRS configuration Type-1 or any DMRS ports among DMRS ports 6-11 for DMRS configuration Type-2 that are scheduled for the UE along with a PTRS that is to be transmitted from the UE. Additionally or alternatively, DMRS ports 4-7 for Type-1 and DMRS ports 6-11 for Type-2 are to be used only when TD-OCC-based multiplexing is supported.

As described herein, the standards and agreements related to 3GPP Rel-18 support a UE to be configured with DMRS etype1 or eType-2 with *maxLength* =1 and a PTRS simultaneously. 3GPP Rel-18 also indicates that there is a way to support PTRS without TD-OCC multiplexing for 8-TX UL transmission. However, while 8-TX UL transmission is also supported by the standards and agreements related to 3GPP Rel-15 DMRS, Rel-15 also dictates that TD-OCC multiplexing should always be supported. Furthermore, the 3GPP has specified that the use of TD-OCC is mandatory for transmissions related to a UE associated with a transmission rank value of five (5) or greater for when DMRS configuration Type-1 is being used, or transmissions related to a UE associated with a transmission rank value of seven (7) or greater for when DMRS configuration Type-7 is being used. Therefore, a conflict has been introduced by the current 3GPP specifications such that 8-TX UL transmission cannot support PTRS.

This conflict is the same for both DL and UL transmissions. However, it is not actively used for FR1 8-TX DL transmissions. However, as described herein, PTRS is very useful for frequency offset compensation for UL transmission. One option for providing frequency offset compensation in UL transmissions is to employ additional DMRS symbols. However, when using a double OFDM symbol DMRS for 8-TX UL transmissions, the additional DMRS symbols increase the DMRS overhead. It is therefore desirable to utilize PTRS to both mitigate phase noise interferences on a radio channel and/or for frequency offset compensation without incurring additional DMRS/bandwidth overhead. Therefore, to address these and other problems, embodiments of the present disclosure are configured to provide several options to support the use of PTRS in 8-TX UL transmission contexts.

Option 1 provides a method for supporting 8-TX UL transmissions with PTRS when Rel-18 DMRS configuration eType-1 or DMRS configuration eType-2 with a single OFMD symbol is used. Embodiments related to Option 1 can determine, based on an indication received from a network element (e.g., a DCI message and/or the like), a transmission rank associated with the UE, where the transmission rank is associated with one or more active transmission layers associated with the UE, and where the one or more active transmission layers are associated with one or more respective DMRS ports associated with the UE.

According to Option 1, in various embodiments, PTRS transmission is supported for UEs associated with a transmission rank that satisfies a predefined transmission rank threshold (e.g., a transmission rank with a corresponding transmission rank value of 5-8). For example, in some embodiments, PTRS transmission is supported for a UE that has a transmission rank value of 5-8, is associated with a DMRS configuration of eType-1 or eType-2, and is associated with a DMRS port that has not been multiplexed via TD-OCC.

Additionally or alternatively, in various embodiments, PTRS transmission is supported for a UE that has a transmission rank value of 5 or 6, is associated with a DMRS configuration of Type-2, and is associated with a DMRS port that has not been multiplexed via TD-OCC.

Additionally or alternatively, in various embodiments, PTRS transmission is supported for a UE that has a transmission rank value of 5 or 6, is associated with a DMRS configuration of Type-1 or Type-2, is associated with a double OFMD symbol DMRS, and is associated with a DMRS port that has not been multiplexed via TD-OCC.

As described herein with relation to Option 1, when a UE is associated with a DMRS configuration of eType-1 or eType-2, is configured for PTRS transmission, and is associated with a double OFMD symbol DMRS, it is possible to support various DMRS port combinations without employing TD-OCC multiplexing. For example, in some embodiments, the same DMRS ports may be repeated for two OFDM symbols during transmission.

The following Table(s) 1-10 propose a number of UE transmission configurations related to one or more embodiments of the present disclosure. Specifically, Table(s) 1-10 describe how various UE transmission configurations can be indicated by a particular DCI message bit field associated with the antenna port(s) related to the UE. As such, the bit field value (e.g., in the Value column) correlates to various UE transmission configuration parameters such as the number of DMRS CDM group(s) without data, various available DMRS port indexes, and an associated number of front-load symbols (e.g., OFDM symbols). The respective values listed in the Table(s) 1-10 correspond to various UE transmission configuration parameters (e.g., PTRS configuration parameters) associated with the UE that can be indicated (e.g., configured) by the network element (e.g., a gNB) via one or more DCI messages, RRC signals, and/or MAC-CE messages. For example, the value associated with *dmrs-Type* dictates the DMRS configuration type (e.g., DMRS configuration Type-1 or Type-2) to be used by the UE. Similarly, the value associated with *maxLength* indicates whether the DMRS associated with the UE is configured as a single or a double OFDM symbol DMRS and corresponds to the value listed in the number of front-load symbols column of the Table(s) 1-10.

As shown, the emboldened values of the Table(s) 1-10 describe potential transmission configurations associated with DMRS ports to be used in conjunction with a double OFMD symbol DMRS multiplexed with TD-OCC and the possibility to use PTRS by a UE associated with a particular transmission rank.
Antenna port(s), transform precoder is disabled, *dmrs-Type* = 1, *maxLength* = 2, rank = **5**

**Table 1**

| **Value** | **Number of DMRS CDM group(s) without data** | **DMRS port(s)** | **Number of front-load symbols** |
|---|---|---|---|
| 0 | 2 | 0,1,2,3,8 | 1 |
| **1** | **2** | **0,1,2,3,8** | **2** |
| 2-15 | Reserved | Reserved | Reserved |

Antenna port(s), transform precoder is disabled, *dmrs-Type* = 1, *maxLength* = 2, rank = **6**

**Table 2**

| **Value** | **Number of DMRS CDM group(s) without data** | **DMRS port(s)** | **Number of front-load symbols** |
|---|---|---|---|
| 0 | 2 | 0,1,2,3,8,10 | 1 |
| **1** | **2** | **0,1,2,3,8,10** | **2** |
| 2-15 | Reserved | Reserved | Reserved |

Antenna port(s), transform precoder is disabled, *dmrs-Type* = 1, *maxLength* = 2, rank = **7**

**Table 3**

| **Value** | **Number of DMRS CDM group(s) without data** | **DMRS port(s)** | **Number of front-load symbols** |
|---|---|---|---|
| 0 | 2 | 0,1,2,3,8,9,10 | 1 |
| **1** | **2** | **0,1,2,3,8,9,10** | **2** |
| 2-15 | Reserved | Reserved | Reserved |

Antenna port(s), transform precoder is disabled, *dmrs-Type* = 1, *maxLength* = 2, rank = **8**

**Table 4**

| **Value** | **Number of DMRS CDM group(s) without data** | **DMRS port(s)** | **Number of front-load symbols** |
|---|---|---|---|
| 0 | 2 | 0,1,2,3,8,9,10,11 | 1 |
| **1** | **2** | **0,1,2,3,8,9,10,11** | **2** |
| 2-15 | Reserved | Reserved | Reserved |

As described herein with relation to Option 1, when Rel-15 DMRS configuration Type-1 or Type-2 is supported for a UE and a transmission of rank 5 or 6 is used without TD-OCC multiplexing, if a plurality of ports are used (e.g., five (5) or six (6) total ports) only one (1) or two (2) DMRS ports can be associated with a PTRS transmission regardless of a related DMRS port channel quality. As described herein, DMRS ports associated with PTRS can be indicated by a DCI/MAC-CE message. In various embodiments, DMRS port combinations can be added for supporting different PTRS mappings.

For a UE associated with a transmission rank value of 5, DMRS port(s) 0,1,4 use TD-OCC multiplexing while DMRS port(s) 2 and 3 do not use TD-OCC multiplexing. As such, only DMRS port(s) 2 or 3 can be associated with a PTRS. To avoid PTRS restriction, various embodiments of the present disclosure provide new DMRS port combinations in addition to those described in the current 3GPP specifications. For example, Table 5 describes the current transmission configurations provided in the current 3GPP specifications, and Table 6 describes how the 3GPP specifications can be improved by providing new DMRS port combinations for UEs associated with a transmission rank value of five (5). Adding DMRS port(s) 0,1,2,3,6 allows PTRS port association with DMRS port 0 or 1. According to network element (e.g., gNB) selection of PTRS mapping, the network element can select from the new DMRS port combinations for a UE associated with a transmission rank value of five (5), as shown in Table 6 below.
Antenna port(s), transform precoder is disabled, *dmrs-Type* = 1, *maxLength* = 2, rank = 5

**Table 5**

| **Value** | **Number of DMRS CDM group(s) without data** | **DMRS port(s)** | **Number of front-load symbols** |
|---|---|---|---|
| 0 | 2 | 0-4 | 2 |
| 1-15 | Reserved | Reserved | Reserved |

Antenna port(s), transform precoder is disabled, *dmrs-Type* = 1, *maxLength* = 2, rank = 5

**Table 6**

| **Value** | **Number of DMRS CDM group(s) without data** | **DMRS port(s)** | **Number of front-load symbols** |
|---|---|---|---|
| 0 | 2 | 0-4 | 2 |
| **1** | **2** | **0,1,2,3,6** | **2** |
| **2**-15 | Reserved | Reserved | Reserved |

For a UE associated with a transmission rank value of 6, all of the DMRS ports cannot be supported with PTRS. If PTRS support is required, additional DMRS combinations can be used. For example, DMRS port(s) 0,1,4 use TD-OCC multiplexing while DMRS port(s) 2 and 3 do not use TD-OCC multiplexing. As such, only DMRS port(s) 2 or 3 can be associated with PTRS. To avoid PTRS restriction, various embodiments of the present disclosure provide new DMRS port combinations in addition to those described in the current 3GPP specifications. Table 7 describes the current transmission configurations provided in the current 3GPP specifications, and Table 8 describes how the 3GPP specifications can be improved by providing new DMRS port combinations for UEs associated with a transmission rank value of six (6). For example, adding DMRS port(s) 0,1,2,3,6 allows PTRS port association with DMRS port 0 or 1. According to network element (e.g., gNB) selection of PTRS mapping, the network element can select from the new DMRS port combinations for a UE associated with a transmission rank value of six (6), as shown in Table 8 below.
Antenna port(s), transform precoder is disabled, *dmrs-Type* = 1, *maxLength* = 2, rank = 6

**Table 7**

| **Value** | **Number of DMRS CDM group(s) without data** | **DMRS port(s)** | **Number of front-load symbols** |
|---|---|---|---|
| 0 | 2 | 0,1,2,3,4,6 | 2 |
| 1-15 | Reserved | Reserved | Reserved |

Antenna port(s), transform precoder is disabled, *dmrs-Type* = 1, *maxLength* = 2, rank = 6

**Table 8**

| **Value** | **Number of DMRS CDM group(s) without data** | **DMRS port(s)** | **Number of front-load symbols** |
|---|---|---|---|
| 0 | 2 | 0,1,2,3,4,6 | 2 |
| **1** | **2** | **0,1,2,3,4,5** | **2** |
| **2** | **2** | **0,1,2,3,6,7** | **2** |
| **3**-15 | Reserved | Reserved | Reserved |

As shown in Table 8, according to various embodiments, DMRS ports(s) 0,1,2,3,4,5 can support PTRS association with DMRS port 2 or 3, while DMRS port(s) 0,1,2,3,6,7 support PTRS association with DMRS ports 0 or 1. As described herein, the emboldened values of the Table(s) 1-10 describe potential transmission configurations associated with DMRS ports to be used in conjunction with a double OFMD symbol DMRS multiplexed with TD-OCC and the possibility to use PTRS in accordance with various embodiments of the present disclosure.

In various embodiments, additional DMRA port combinations can also be added for UEs configured according to DMRS configuration Type-2 and associated with a transmission rank value of 5 or 6 respectively, as shown below in Table(s) 9 and 10 below.
Antenna port(s), transform precoder is disabled, *dmrs-Type* = 2, *maxLength* = 2, rank = **5**

**Table 9**

| **Value** | **Number of DMRS CDM group(s) without data** | **DMRS port(s)** | **Number of front-load symbols** |
|---|---|---|---|
| 0 | 3 | 0-4 | 1 |
| 1 | 2 | 0,1,2,3,6 | 2 |
| **2** | **2** | **0,1,2,3,8** | **2** |
| 3-31 | Reserved | Reserved | Reserved |

Antenna port(s), transform precoder is disabled, *dmrs-Type* = 2, *maxLength* = 2, rank = **6**

**Table 10**

| **Value** | **Number of DMRS CDM group(s) without data** | **DMRS port(s)** | **Number of front-load symbols** |
|---|---|---|---|
| 0 | 3 | 0-5 | 1 |
| 1 | 2 | 0,1,2,3,6,8 | 2 |
| **2** | **2** | **0,1,2,3,6,7** | **2** |
| **3** | **2** | **0,1,2,3,8,9** | **2** |
| 2-31 | Reserved | Reserved | Reserved |

Option 2 provides a method for removing and/or bypassing the PTRS restriction for 8-TX DL/UL transmissions for a UE capable of supporting the 8-TX transmission functionality.

Embodiments related to Option 2 are applicable when a particular UE has indicated the UE has the capability to support various 8-TX transmission configurations. In various embodiments, the network element (e.g., a gNB) shall configure whether the PTRS restriction removed and/or bypassed for the particular UE by, for example, indicating the proposed configuration via one or more indications (e.g., a DCI comprising control configuration information). Additionally or alternatively, the PTRS configurations can be indicated to the UE via RRC signaling and/or a medium access control (MAC) control element (CE) message.

Option 2 provides various embodiments that introduce a PTRS RRC configuration designed to enable (e.g., or disable) a UE to transmit a DMRS (e.g., a double OFMD symbol DMRS) along with a PTRS via a respective DMRS port multiplexed via TD-OCC. Said differently, various embodiments can employ the PTRS RRC configuration to remove and/or bypass any PTRS restrictions associated with the UE such that the UE can transmit the PTRS. In various embodiments, when a UE is configured/indicated for a certain DMRS port to allow PTRS transmission, the UE shall transmit a TD-OCC-based double OFDM symbol DMRS UL transmission and the PTRS via separate OFDM symbols. Additionally or alternatively, in various embodiments, the transmission configurations of the UE can be dynamically updated based on a UE transmission configuration formatted as a MAC-CE/DCI message received from a network element (e.g., a gNB). For example, if the UE receives a MAC-CE/DCI message that indicates that that the UE shall be configured to perform PTRS transmission, the UE shall overwrite one or more PTRS configuration parameters associated with the UE according to one or more respective parameter values indicated by the MAC-CE/DCI message.

In various embodiments, the one or more PTRS configuration parameters associated with the UE that can be indicated for configuration by the MAC-CE/DCI messages comprise one or more portions of data associated with at least one of DMRS symbol structure information (e.g., whether the DMRS is a single or a double OFDM symbol DMRS), DMRS port allocation information (e.g., DMRS port index and/or identification information), subcarrier frequency information, OFDM symbol allocation information related to the DMRS, OFDM symbol allocation information related to the PTRS, or information indicating whether the apparatus shall be enabled to cause transmission of the PTRS (e.g., a bit-field value indicating that PTRS transmissions shall be enabled known as *ptrs-TD-OCC-Allowed-r 18).*

In various embodiments, the following steps can be used as a base method for enabling 8-TX UL transmission with PT-RS configured for a UE.

Step 0: The UE can indicate the potential to use a higher UL transmission rank with PTRS by performing capability signaling. For example, the UE can transmit capability information related to transmitting one or more PUSCH transmissions from the UE to a network element (e.g., a gNB).

Step 1: The network element (e.g., the gNB) can receive the capability information as well as UE class information and determine a UE transmission configuration for the UE. The network element (e.g., the gNB) can generate a UE transmission configuration comprising a plurality of PTRS configuration parameters including a *ptrs-TD-OCC-Allowed-r18* configuration parameter that indicates to a UE whether the UE is enabled (or disabled) to transmit PTRS associated with a particular DMRS associated with one or more DMRS ports. In various embodiments, the UE transmission configuration can be formatted in a particular DCI, MAC-CE message format (e.g., DCI format 0_1) or an RRC signal and transmitted to the UE.

Step 2: The network element (e.g., the gNB) transmits the UE transmission configuration to the UE and configures the UE based in part on the PTRS configuration parameters associated with the UE transmission configuration (e.g., *ptrs-TD-OCC-Allowed-r18*).

Step 3. After the UE is scheduled (e.g., configured) via the UE transmission configuration and mapped to one or more indicated DMRS ports (e.g., mapped using various configuration parameters listed in Table(s) 1-10), the UE can transmit DMRS, PTRS, and PUSCH according to the UE transmission configuration.

Step 4. Once the UE receives the UE transmission configuration the UE shall overwrite one or more respective PTRS configuration parameters (e.g., the *ptrs-TD-OCC-Allowed-r18* configuration parameter).

Step 4.1 Additionally or alternatively, a DCI/MAC-CE message can be used to overwrite a UE transmission configuration associated with the UE that was originally scheduled (e.g., transmitted and/or configured) for the UE based on an RRC signal and/or a DCI message. In this way, transmission of a PTRS by a particular UE can be toggled (e.g., enabled or disabled) depending on various contexts.

In various embodiments, if *ptrs-TD-OCC-Allowed-r18* is disabled or not configured, the UE follows legacy behavior (e.g., restricts PTRS transmission in contexts in which a double OFDM symbol DMRS is used). When *ptrs-TD-OCC-Allowed-r18* is configured and one or more specified DMRS ports are used, the PTRS can transmitted. Additionally or alternatively, when a UE is scheduled to transmit PUSCH with an allocated duration of four (4) OFDM symbols or less, and if *L_{PTRS}* (e.g., PTRS time density) is set to four (4), the UE shall not transmit PTRS.

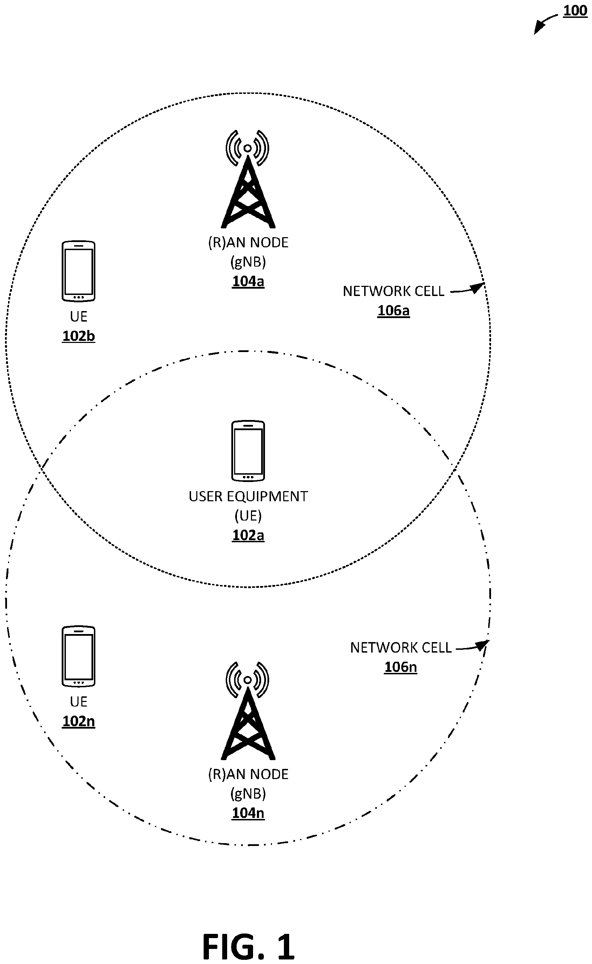

FIG. 1 illustrates a communication system 100 configured in accordance with at least some embodiments of the present disclosure. However, it is to be appreciated that embodiments are not limited to the network configurations illustrated herein or otherwise described below. It is to be understood that the elements shown in communication system 100 are intended to represent a primary function provided within the system. As such, the blocks shown in FIG. 1 reference specific elements in 5G networks that provide the primary functions. However, other network elements may be used to implement some or all of the primary functions represented. Also, it is to be understood that not all functions of a 5G network are depicted in FIG. 1. Rather, functions that facilitate an explanation of illustrative embodiments are represented.

By way of example, the communication system 100 may be deployed within a radio access architecture. However, the system may be deployed in other applications including within other communication networks including, for example, LTE advanced (LTE-A), a universal mobile telecommunications system (UMTS) radio access network (UTRAN or E-UTRAN), wireless local area network (WLAN or Wi-Fi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof. Any access network (AN) eligible to access the 5G core network such as an untrusted Non 3GPP access terminated at a Non-3GPP interworking function (N3IWF), a trusted Non-3GPP access terminated at a trusted non-3GPP gateway function (TNGF) or a Wireline access terminated at a wireless access gateway function (W-AGF) may be used instead of the NG RAN/gNB. Moreover, although described herein in conjunction with a 5G core network, the method, apparatus, and computer program product of certain example embodiments may be employed in conjunction with other technologies, such as a 5G, 6G, and/or beyond network or the like.

One or more UEs 102a-n can be configured to be in a wireless connection on one or more communication channels in a cell with a radio access network (RAN) node, such as a gNB. The physical link from a UE 102a to a gNB is called the uplink (UL) or reverse link and the physical link from the gNB to the UE 102a is called the downlink (DL) or forward link. It should be appreciated that the gNBs or their functionalities may be implemented by using any node, host, server, or access point (AP) or other entity suitable for such a usage. Furthermore, a UE 102a can be configured to be in a wireless connection to one or more other UEs 102b-n such as, for example, via a Sidelink channel.

A communications system typically comprises more than one gNB, in which case the gNBs may also be configured to communicate with one another over links, wired or wireless, designed for the purpose. These links may be used for signaling purposes. The gNB is a computing device configured to control the radio resources of the communication system to which the gNB is coupled. The gNB may also be referred to as a base station, an access point or any other type of interfacing device including a relay station capable of operating in a wireless environment. The gNB includes or is coupled to one or more transceiver(s). From the transceivers of the gNB, a connection is provided to an antenna unit that establishes bi-directional radio links to UEs. As such, the transceivers of the gNB and the transceivers of the UEs may include transmitters and receivers configured to communicate via a channel. Although reference is made to a gNB herein, this is by way of example, but not of limitation, as other types of AN nodes may alternatively be employed.

Accordingly, as shown, the communication system 100 comprises one or more UEs 102an that communicate, such as via an air interface, with one or more AN nodes 104a-n. In some embodiments, the one or more AN nodes 104a-n are RAN nodes. The one or more UEs 102a-n may be a respective mobile station, and such a mobile station may comprise, by way of example, a mobile telephone, a computer, or any other type of communication device. The terms "user equipment (UE)," "user device," "computing device," or "apparatus" as used herein are therefore intended to be construed broadly, so as to encompass a variety of different types of mobile stations, subscriber stations or, more generally, communication devices, including examples such as a combination of a data card inserted in a laptop or other equipment.

The one or more UEs 102a-n may also refer to a respective portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a particular UE 102a of the one or more UEs 102a-n may also be a nearly exclusive uplink only device, of which an example is a camera or video camera loading images or video clips to a network. The one or more UEs 102a-n may also be a device having the capability to operate in an IoT network, which is a scenario in which objects are provided with the ability to transfer data over a network without requiring human-to-human or human-to-computer interaction. The one or more UEs 102a-n (or in some embodiments a layer 3 relay node) is configured to perform one or more user device functionalities. A respective UE 102a of the one or more UEs 102an may also be called a subscriber unit, mobile station, remote terminal, access terminal, user terminal or user equipment just to mention but a few names or apparatuses.

In various embodiments, the one or more UEs 102a-n are comprised of a Universal Integrated Circuit Card (UICC) and Mobile Equipment (ME). The UICC is the user-dependent part of the UE and contains at least one Universal Subscriber Identity Module (USIM) and appropriate application software. The USIM securely stores the International Mobile Subscriber Identity (IMSI) number and its related key, which are used to identify and authenticate subscribers to access networks. The ME is the user-independent part of the UE and contains terminal equipment (TE) functions and various mobile termination (MT) functions.

The AN nodes 104a-n are illustratively part of a RAN of the communication system 100. In a 5GS network, the AN nodes 104a-n are typically implemented by an gNB. Such an access network may comprise, for example, a plurality of base stations which may include one or more gNBs (which may also be split in a centralized unit (CU) and a distributed unit (DU) part) and/or other AN node types, such as evolved node Bs (eNBs), node Bs, base stations (BS) and/or N3IWF, or any other types of access nodes such as WLAN access points, as well as one or more associated radio network control functions. The base stations and radio network control functions may be logically separate entities, but in a given embodiment may be implemented in the same physical network element, such as, for example, a base station router or femto cellular access point. As will be appreciated by one of skill in the art, any variety of AN nodes and/or access nodes may also implement similar operations, functions, etc.

In some example embodiments, the AN nodes 104a-n are operatively coupled to a core network function, such as via an NG interface. The core network function may include an access and mobility management function (AMF), session management function (SMF), representative network function (NF-X), or any of core network function. A core network function may be an element of the core network (CN) part of the communication system 100 that is responsible for one or more associated operations. Additionally or alternatively, the AN nodes 104a-n can generate, relay, augment, and/or otherwise manage one or more network cells configured to provide communications services (e.g., provide access to one or more services associated with the core network function) to one or more UEs 102a-n located within operational range of the one or more respective network cells. According to various embodiments, a network cell (e.g., network cell 106a) is a serving cell (e.g., also known as a source cell) associated with an AN node 104a that a respective UE 102a of the one or more UEs 102an is currently connected to in order to facilitate communications via a particular network (e.g., a 5G network). Additionally or alternatively, in various embodiments, a network cell (e.g., network cell 106n) is a candidate cell (e.g., also known as a target cell) associated with an AN node 104n that the UE 102a may potentially switch to (e.g., via a handover procedure) as the UE 102a traverses a real-world environment associated with one or more network cells related to the particular network (e.g., the 5G network).

5G enables using multiple input, multiple output (MIMO) antennas, many more base stations or nodes than the LTE (a so-called small cell concept), including macro sites operating in cooperation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors, and real-time control. 5G has multiple radio interfaces, e.g., below 6GHz or above 24 GHz, cmWave and mmWave, and is integrable with existing legacy radio access technologies, such as the LTE. Integration with the LTE may be implemented as a system where macro coverage is provided by the LTE and 5G radio interface access comes from small cells by aggregation to the LTE. In other words, 5G can support both inter-RAT operability (such as LTE-5G) and inter-RI operability (inter-radio interface operability, such as below 6GHz - cmWave, 6 or above 24 GHz - cmWave and mmWave).

The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets, and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications, etc.).

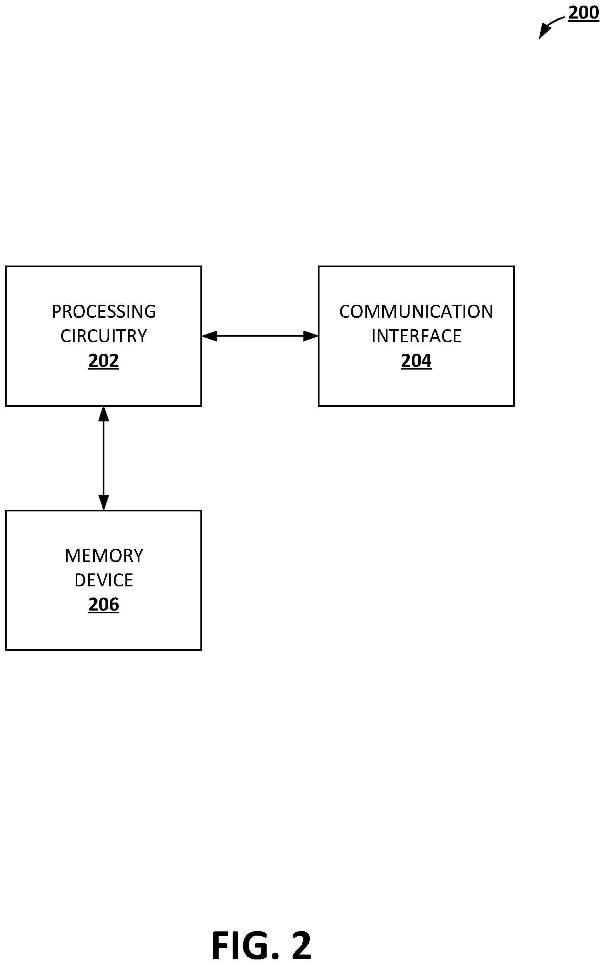

FIG. 2 illustrates an example of an apparatus 200 that may be configured to function as, or may be embodied by, a network entity, such as a UE 102a, UE, AN node 104, AMF, SMF and/or NF-X. As shown in FIG. 2, the apparatus 200 includes, is associated with or is in communication with processing circuitry 202, a memory device 206, and a communication interface 204. The processing circuitry 202 may be in communication with the memory device via a bus for passing information among components of the apparatus 200. The memory device 206 may be non-transitory and may include, for example, one or more volatile and/or non-volatile memories. In other words, for example, the memory device 206 may be an electronic storage device (e.g., a computer readable storage medium) comprising gates configured to store data (e.g., bits) that may be retrievable by a machine (e.g., a computing device like the processing circuitry). The memory device 206 may be configured to store information, data, content, applications, instructions, or the like for enabling the apparatus to carry out various functions in accordance with an example embodiment of the present disclosure. For example, the memory device 206 could be configured to buffer input data for processing by the processing circuitry 202. Additionally or alternatively, the memory device 206 could be configured to store instructions for execution by the processing circuitry 202.

The apparatus 200 may, in some embodiments, be embodied in various computing devices as described above. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment on a single chip or as a single "system on a chip." As such, in some cases, a chip or chipset may constitute means for performing one or more operations for providing the functionalities described herein.

The processing circuitry 202 may be embodied in a number of different ways. For example, the processing circuitry 202 may be embodied as one or more of various hardware processing means such as a coprocessor, a microprocessor, a controller, a digital signal processor (DSP), a processing element with or without an accompanying DSP, or various other circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processing circuitry may include one or more processing cores configured to perform independently. A multi-core processing circuitry may enable multiprocessing within a single physical package. Additionally or alternatively, the processing circuitry may include one or more processors configured in tandem via the bus to enable independent execution of instructions, pipelining and/or multithreading.

In an example embodiment, the processing circuitry 202 may be configured to execute instructions stored in the memory device 206 or otherwise accessible to the processing circuitry 202. Alternatively or additionally, the processing circuitry may be configured to execute hard coded functionality. As such, whether configured by hardware or software methods, or by a combination thereof, the processing circuitry may represent an entity (e.g., physically embodied in circuitry) capable of performing operations according to an embodiment of the present disclosure while configured accordingly. Thus, for example, when the processing circuitry is embodied as an ASIC, FPGA or the like, the processing circuitry may be specifically configured hardware for conducting the operations described herein. Alternatively, as another example, when the processing circuitry 202 is embodied as an executor of instructions, the instructions may specifically configure the processor to perform the algorithms and/or operations described herein when the instructions are executed. However, in some cases, the processing circuitry 202 may be a processor of a specific device (e.g., an image or video processing system) configured to employ an embodiment of the present disclosure by further configuration of the processing circuitry by instructions for performing the algorithms and/or operations described herein. The processing circuitry 202 may include, among other things, a clock, an arithmetic logic unit (ALU) and logic gates configured to support operation of the processing circuitry.

The communication interface 204 may be any means such as a device or circuitry embodied in either hardware or a combination of hardware and software that is configured to receive and/or transmit data from/to a network and/or any other device (e.g., a particular UE 102a, UE, and/or the like) or module in communication with the apparatus. In this regard, the communication interface 204 may include, for example, an antenna (or multiple antennas) and supporting hardware and/or software for enabling communications with a wireless communication network. Additionally, the communication interface 204 can embody and/or integrate with one or more RF and/or wireless transceivers, where each wireless transceiver includes a transmitter to transmit signals and a receiver to receive signals. The one or more RF and/or wireless transceivers can be configured for facilitating communication on a 4G/LTE network, a 5G network, and/or the like. Additionally, the one or more RF and/or wireless transceivers can be configured for facilitating communication on various respective communication networks. The one or more RF and/or wireless transceivers receive signals or data and/or transmit or send signals and/or data.
In various embodiments, processing circuitry 202 can control the antenna(s) and/or the one or more RF and/or wireless transceivers to receive, send, broadcast, or transmit signals and/or data. Additionally or alternatively, the communication interface 204 may include the circuitry for interacting with the antenna(s) and/or the one or more RF and/or wireless transceivers to cause transmission of signals via the antenna(s) or to handle receipt of signals received via the antenna(s). Additionally or alternatively, in some environments, the communication interface 204 may support wired communication. As such, for example, the communication interface may include a communication modem and/or other hardware/software for supporting communication via cable, digital subscriber line (DSL), universal serial bus (USB) or other mechanisms.

FIG(s). 3A-H illustrate various DMRS ports in various respective configurations in accordance with one or more embodiments of the present disclosure. As described herein, a particular DMRS port (e.g., DMRS port 0) is associated with a respective resource grid (e.g., resource grid 302). In various embodiments, a resource grid is associated with a physical resource block (PRB) and comprises a predefined number of subcarriers (e.g., subcarriers 306a-n) on a frequency axis where, when concatenated, the subcarriers represent a full carrier frequency bandwidth in the frequency domain. Additionally, a resource grid comprises a predefined number of OFDM symbols (e.g., OFDM symbols 308a-n) where, when concatenated, the OFDM symbols represent one subframe in the time domain. An OFDM symbol can be understood as a signal transmission instance corresponding to a predefined duration of time in the time domain that is associated with the subcarriers of a particular resource grid. Traditionally, there are twelve (12) subcarriers and fourteen (14) OFDM symbols in a resource grid. A resource element (RE) (e.g., REs 304a-n) is the smallest physical resource in NR that can be allocated to a UE or a network element (e.g., an AN node 104a) and represents one subcarrier during a duration related to one OFDM symbol. There can be one resource grid for a given antenna port (e.g., DMRS port 0), a subcarrier spacing configuration, and a respective transmission direction (e.g., uplink (UL) from a UE 102a to an AN node 104a, or downlink (DL) from the AN node 104a to the UE 102a).

FIG(s). 3A-D depict DMRS ports 0-1 wherein an associated DMRS 310 is configured in a DMRS Type-1 configuration. For DMRS configuration Type-1, there are two possible CDM groups/shifts across eight possible antenna ports (e.g., DMRS ports 0-7) that are composed of alternating subcarriers. FIG(s). 3A and 3C illustrate the different shifts associated for DMRS subcarrier locations with the DMRS configuration type configured as Type-1. As shown by FIG(s). 3A and 3C, the resource elements (REs) 304a-n corresponding to the DMRS subcarrier locations of a lower CDM group (e.g., the REs 304a-n associated with DMRS port 0 depicted by FIG. 3A) are blocked for data transmission in the DMRS ports of higher a CDM group (e.g., as shown by the REs blocked for data transmission 314 associated with DMRS port 2 and 3).

FIG. 3B illustrates a DMRS port 1 associated with a DMRS 310 configured as a Type-1. As shown, FIG. 3B also illustrates that an additional DMRS position has been configured for DMRS port 1 (e.g., as seen by the DMRS 310 REs associated with the OFDM symbol (e.g., an OFDM symbol 308a) at index 11). FIG. 3D illustrates a DMRS port 3 associated with a DMRS 310 configured as a Type-1 that has also been configured as a double OFDM symbol DMRS as depicted by the DMRS 310 REs associated with the consecutive OFDM symbols associated with OFDM symbol indices 2 and 3. As described herein, the double OFDM symbol DMRS configuration can be indicated by the network element (e.g. a gNB) via RRC signaling and/or a DCI/MAC-CE message via the *maxLength* parameter.

FIG(s). 3A-C depict a PTRS 312 associated with the DMRS ports 0-2. As described herein, when a UE is configured to transmit a PTRS 312, the PTRS 312 must correspond to a subcarrier 306a associated with a DMRS 310. For example, as shown in FIG. 3C, the PTRS 312 is associated with the subcarrier 306a associated with the subcarrier index 7 that correlates to the DMRS 310. Furthermore, as show in FIG. 3C, a PTRS 312 must be configured with a PTRS time density 316 with a value related to the set {1, 2, 4} and is configured based on the MCS related to the UE (e.g., a UE 102a). As depicted in FIG. 3C, the PTRS time density 316 associated with DMRS port 2 has a value of four (4). A PTRS time density 316 can be understood as an OFDM symbol offset related to the PTRS 312. 3GPP specifications indicate that the PTRS time density 316 must begin relative to an RE associated with either a DMRS 310 or an RE associated with a prior instance of the PTRS 312. For example, as shown in FIG. 3C, the PTRS time density begins at the subcarrier index 7 associated with the OFDM symbol index 0 and then restarts at the OFDM symbol index 2 associated with the DMRS 310.

FIG(s). 3E-H illustrate the different shifts associated with DMRS subcarrier locations for DMRS configuration Type-2. As shown by FIG(s). 3G and 3H, the REs 304a-n corresponding to the DMRS subcarrier locations of lower CDM groups are blocked for data transmission in the antenna ports of higher CDM groups. For example, the REs 304a-n associated with DMRS port 0 depicted by FIG. 3E are blocked for data transmission in the DMRS ports of higher a CDM group (e.g., as shown by the REs blocked for data transmission 314 associated with DMRS port 2 and 4). FIG. 3F depicts a DMRS port 1 associated with a DMRS 310 configured in a Type-2 DMRS configuration as well as a double OFDM symbol DMRS configuration. As described herein, the double OFDM symbol DMRS configuration can be indicated by the network element (e.g. a gNB) via RRC signaling and/or a DCI/MAC-CE message via the *maxLength* parameter.

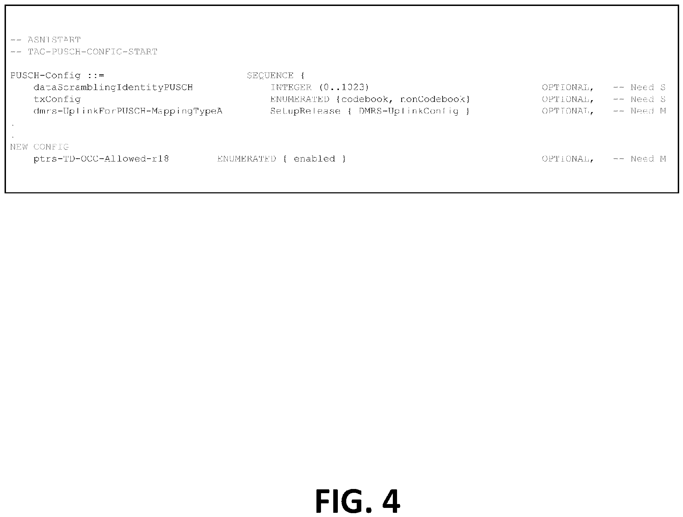

FIG. 4 illustrates a physical uplink shared channel (PUSCH) configuration information element in accordance with one or more example embodiments of the present disclosure. The PUSCH configuration information element is a UE transmission configuration that can be generated and/or transmitted by a network element (e.g., a gNB) and used by a UE to remove, modify, rewrite, and/or otherwise update one or more PTRS configuration parameters associated with the UE. As shown in FIG. 4, the PUSCH configuration information element comprises the *ptrs-TD-OCC-Allowed-r18* parameter that indicates to a UE whether the UE is configured (e.g., enabled) to transmit a PTRS associated with a DMRS related to one or more respective DMRS ports. In various embodiments, a PUSCH configuration information element such as the one depicted in FIG. 4 can be used to configure a UE via one or more an RRC signal and/or DCI/MAC-CE messages generated by and/or associated with the PUSCH configuration information element.

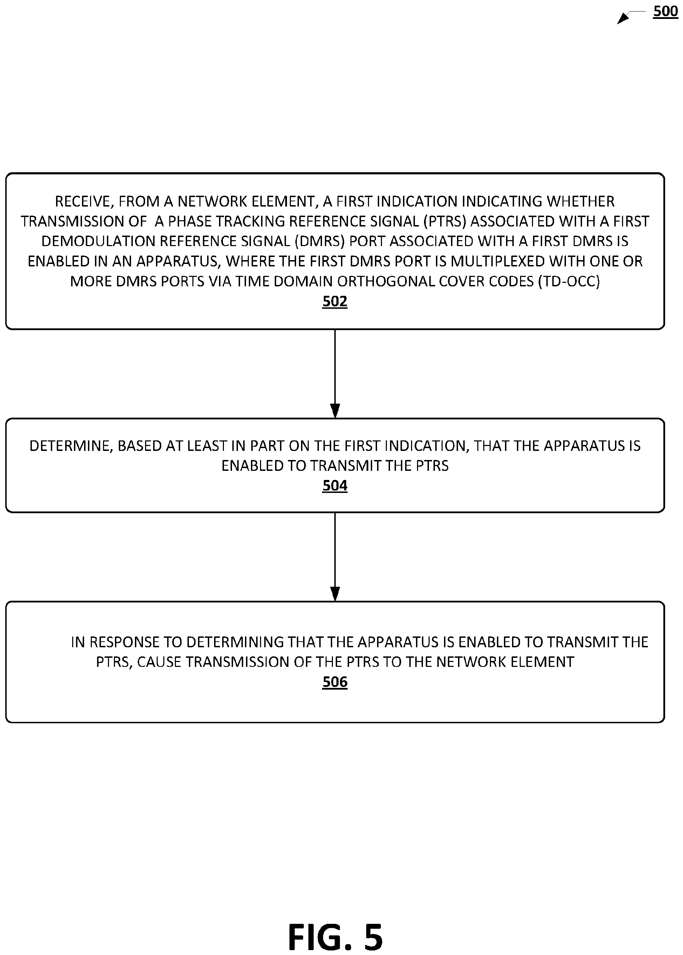

FIG. 5 illustrates a flowchart depicting a method 500 for improved transmission configurations for PTRSs associated with DMRS ports multiplexed via TD-OCC for a UE in accordance with one or more example embodiments of the present disclosure. The method 500 can be implemented, for example, by one or more components of an apparatus 200. In various embodiments the apparatus 200 can be embodied by a networking element (e.g., a gNB). In various other embodiments, the apparatus 200 can be embodied by a UE 102a. Additionally or alternatively, the apparatus 200 can be embodied by any other particular computing device (e.g., smartphone, laptop, tablet computer, networking device, etc.) associated with a particular communications network. It will be appreciated that the apparatus 200 may be configured to perform the method 500 with the reference to the components of the apparatus 200 again being provided by way of example but not of limitation. As such, the apparatus 200 includes means, such as the processing circuitry 202, at least one processor, communication interface 204, at least one memory device 206, and/or the like, configured to perform the various operations associated with the method 500.

The method 500 begins at operation 502 in which the apparatus 200 is configured to receive, from a network element, a first indication indicating whether transmission of a phase tracking reference signal (PTRS) associated with a first demodulation reference signal (DMRS) port associated with a first DMRS is enabled in the apparatus 200, where the first DMRS port is multiplexed with one or more DMRS ports via time domain orthogonal cover codes (TD-OCC). For example, in various embodiments, prior to receiving the first indication from the network element (e.g., a gNB), a UE can indicate the UE's potential to use a high UL transmission rank with PTRS by performing capability signaling. For example, the UE can transmit capability information related to a respective rank of one or more PUSCH transmissions from the UE to a network element (e.g., a gNB). The network element (e.g., the gNB) can receive the capability information as well as UE class information and determine a UE transmission configuration for the UE.

The network element (e.g., the gNB) can generate a UE transmission configuration comprising a plurality of PTRS configuration parameters including a *ptrs-TD-OCC-Allowed-r18* configuration parameter that indicates to a UE whether the UE is enabled to transmit PTRS associated with a particular DMRS associated with one or more DMRS ports. In various embodiments, a UE transmission configuration (e.g., the first indication received by the UE) can be formatted in a particular DCI, MAC-CE message format (e.g., DCI format 0_1) or an RRC signal and transmitted to the UE. Additionally or alternatively, the first indication (e.g., associated with and/or embodied by the UE transmission configuration) can be configured as a command (e.g., an program code instruction) or a request generated by the network element (e.g., the gNB).

At operation 504 the apparatus 200 is configured to determine, based at least in part on the first indication, that the apparatus is enabled to transmit the PTRS. In various embodiments, a UE can receive a UE transmission configuration comprising a plurality of PTRS configuration parameters including a *ptrs-TD-OCC-Allowed-r18* configuration parameter that indicates to a UE whether the UE is enabled to transmit PTRS associated with a particular DMRS associated with one or more DMRS ports. For example, based on a bit-field value associated with the *ptrs-TD-OCC-Allowed-r18* configuration parameter, the UE can be enabled or disabled to transmit the PTRS.

At operation 506 the apparatus 200 is configured to, in response to determining that the apparatus is enabled to transmit the PTRS, cause transmission of the PTRS to the network element.

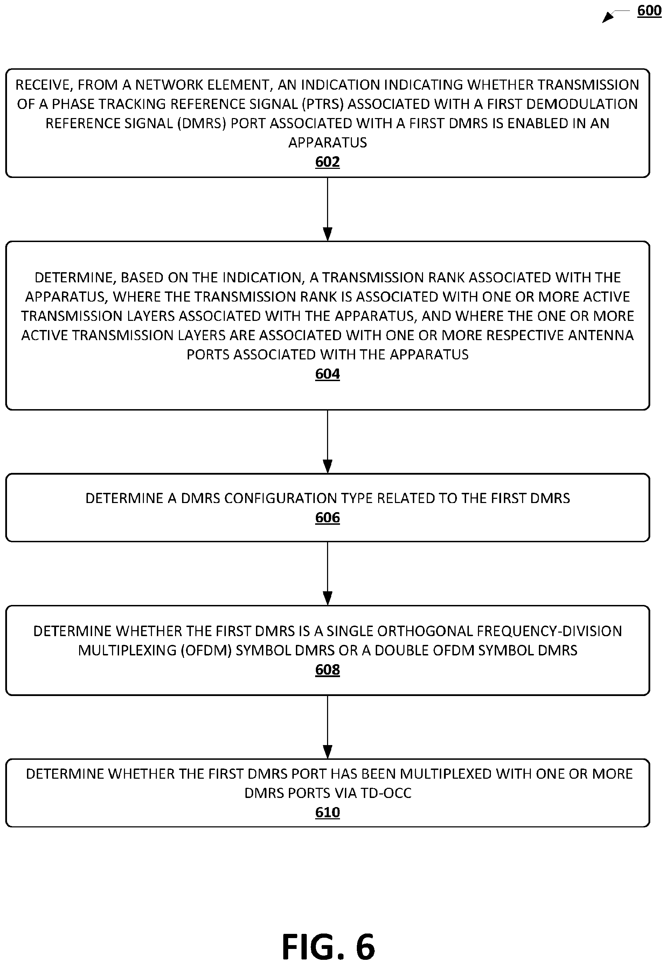

FIG. 6 illustrates a flowchart diagram depicting a method 600 for improved transmission configurations for PTRSs associated with DMRS ports multiplexed via TD-OCC for a UE in accordance with one or more example embodiments of the present disclosure. The method 400 can be implemented, for example, by one or more components of an apparatus 200. In various embodiments the apparatus 200 can be embodied by a networking element (e.g., a gNB). In various other embodiments, the apparatus 200 can be embodied by a UE 102a. Additionally or alternatively, the apparatus 200 can be embodied by any other particular computing device (e.g., smartphone, laptop, tablet computer, networking device, etc.) associated with a particular communications network. It will be appreciated that the apparatus 200 may be configured to perform the method 600 with the reference to the components of the apparatus 200 again being provided by way of example but not of limitation. As such, the apparatus 200 includes means, such as the processing circuitry 202, at least one processor, communication interface 204, at least one memory device 206, and/or the like, configured to perform the various operations associated with the method 600.

The method 600 begins at operation 602 in which the apparatus 200 is configured to receive, from a network element, an indication indicating whether the apparatus is enabled to transmit a phase tracking reference signal (PTRS) associated with a first demodulation reference signal (DMRS) port associated with a first DMRS.

At operation 604 the apparatus 200 is configured to determine, based on the indication, a transmission rank associated with the apparatus, wherein the transmission rank is associated with one or more active transmission layers associated with the apparatus, and wherein the one or more active transmission layers are associated with one or more respective antenna ports associated with the apparatus.

At operation 606 the apparatus 200 is configured to determine a DMRS configuration type related to the first DMRS. The DMRS configuration type indicates the frequency density of the DMRS and is signaled by the RRC. For example, as shown in FIG(s). 3A-D, the DMRS Configuration Type-1 defines six (6) subcarriers per PRB per antenna port (e.g., per DMRS port), and comprises alternate subcarriers. As shown in FIG(s). 3E-H, the DMRS Configuration Type-2 defines four (4) subcarriers per PRB per antenna port (e.g., per DMRS port), and consists of two groups of two consecutive subcarriers.

For DMRS configuration Type-2, there are three possible CDM groups/shifts across twelve antenna ports (e.g., DMRS ports 0-7) each of which is composes of two sets of two consecutive subcarriers. FIG(s). 3E-H illustrate the different shifts associated with DMRS subcarrier locations for DMRS configuration Type-2. As shown by FIG(s). 3G and 3H the REs 304a-n corresponding to the DMRS subcarrier locations of lower CDM groups are blocked for data transmission in the antenna ports of higher CDM groups. For example, the REs 304a-n associated with DMRS port 0 depicted by FIG. 3E are blocked for data transmission in the DMRS ports of higher a CDM group (e.g., as shown by the REs blocked for data transmission 314 associated with DMRS port 2 and 4).

Furthermore, as described herein, recent 3GPP standards and agreements (e.g., agreements related to 3GPP Rel-18), have provided new DMRS types eType1 and eType2. The new DMRS types support two times more DMRS ports by applying FD-OCC4 instead of FD-OCC2.

At operation 608 the apparatus 200 is configured to determine whether the first DMRS is a single orthogonal frequency-division multiplexing (OFDM) symbol DMRS or a double OFDM symbol DMRS. As shown in FIG. 3D, a double OFDM symbol DMRS may have a basic structure using a pattern in which a single OFDM symbol DMRS is repeated. However, the double OFDM symbol DMRS is different from the single OFDM symbol DMRS with respect to which method is applied for spreading in the time domain. For example, for TD-OCC = {(1, 1)}, a simple repetition pattern is used, and thus the number of supported DMRS ports does not increase. However, since two orthogonal codes can be additionally used where TD-OCC = {(1, 1), (1, -1)}, the maximum number of supported DMRS ports may increase by a factor of two. In such contexts, the UE may receive respective DMRS port allocation information through a downlink control information (DCI) transmission of PDCCH. In various contexts, TD-OCC is used with double OFDM symbol DMRSs such that the TD-OCC are applied to two adjacent DMRS symbols.

At operation 610 the apparatus 200 is configured to determine whether the first DMRS port has been multiplexed with one or more DMRS ports via TD-OCC. In various embodiments, in response to determining that the transmission rank satisfies a predefined transmission rank threshold, in response to determining that the DMRS configuration type is an eType-1 DMRS configuration type or an eType-2 DMRS configuration type, in response to determining that the first DMRS is associated with a single OFDM symbol DMRS structure and, in response to determining that the first DMRS port has not been multiplexed via TD-OCC, the apparatus 200 can cause transmission of a PTRS to the network element.

In various other embodiments, in response to determining that the transmission rank satisfies a predefined transmission rank threshold, in response to determining that the DMRS configuration type is a Type-2 DMRS configuration type, in response to determining that the first DMRS is associated with a single OFDM symbol DMRS structure and, in response to determining that the first DMRS port has not been multiplexed via TD-OCC, the apparatus 200 can cause transmission of a PTRS to the network element.

In various other embodiments, in response to determining that the transmission rank satisfies a predefined transmission rank threshold, in response to determining that the DMRS configuration type is a Type-1 DMRS configuration type or a Type-2 DMRS configuration type, in response to determining that the first DMRS is associated with a double OFDM symbol DMRS structure and, in response to determining that the first DMRS port has not been multiplexed via TD-OCC, the apparatus 200 can cause transmission of a PTRS to the network element.

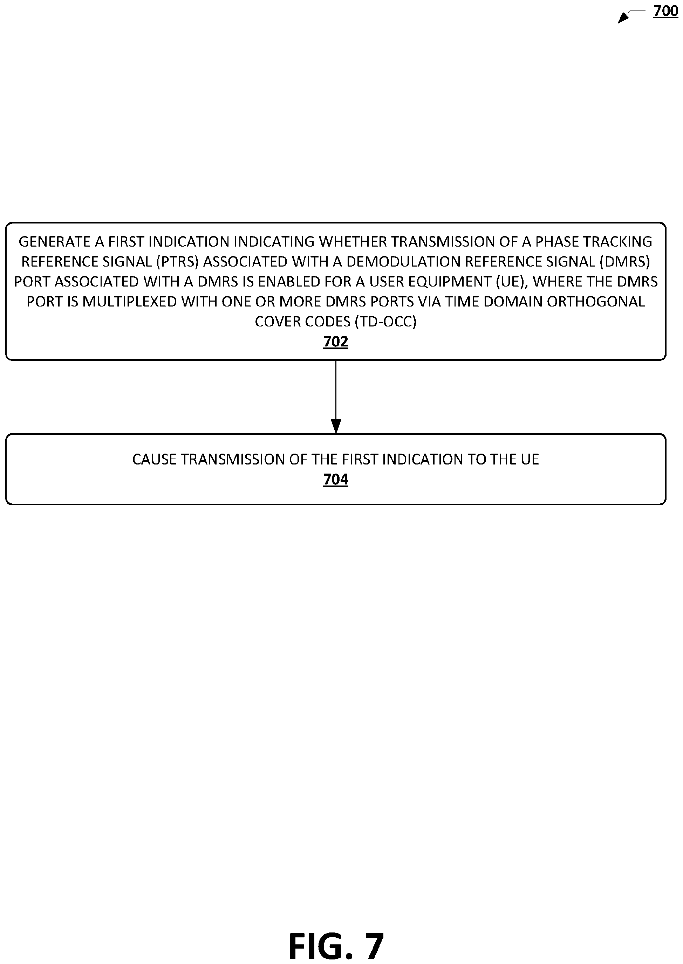

FIG. 7 illustrates a flowchart diagram depicting a method 700 for improved transmission configurations for PTRSs associated with DMRS ports multiplexed via TD-OCC for a UE in accordance with one or more example embodiments of the present disclosure. The method 700 can be implemented, for example, by one or more components of an apparatus 200. In various embodiments the apparatus 200 can be embodied by a networking element (e.g., a gNB). In various other embodiments, the apparatus 200 can be embodied by a UE 102a. Additionally or alternatively, the apparatus 200 can be embodied by any other particular computing device (e.g., smartphone, laptop, tablet computer, networking device, etc.) associated with a particular communications network. It will be appreciated that the apparatus 200 may be configured to perform the method 700 with the reference to the components of the apparatus 200 again being provided by way of example but not of limitation. As such, the apparatus 200 includes means, such as the processing circuitry 202, at least one processor, communication interface 204, at least one memory device 206, and/or the like, configured to perform the various operations associated with the method 700.

The method 700 begins at operation 702 in which the apparatus 200 is configured to generate a first indication indicating whether a user equipment (UE) is enabled to transmit a phase tracking reference signal (PTRS) associated with a demodulation reference signal (DMRS) port associated with a DMRS, wherein the DMRS port is multiplexed with one or more DMRS ports via time domain orthogonal cover codes (TD-OCC). For example, the apparatus 200 can be configured to generate an indication associated with and/or embodied by a physical uplink shared channel (PUSCH) configuration information element in accordance with one or more example embodiments of the present disclosure. The PUSCH configuration information element is a UE transmission configuration that can be generated and/or transmitted by a network element (e.g., a gNB) and used by a UE to remove, modify, rewrite, and/or otherwise update one or more PTRS configuration parameters associated with the UE.

As shown in FIG. 4, the PUSCH configuration information element comprises the *ptrs-TD-OCC-Allowed-r18* parameter that indicates to a UE whether the UE is configured (e.g., enabled) to transmit a PTRS associated with a DMRS related to one or more respective DMRS ports. In various embodiments, a PUSCH configuration information element such as the one depicted in FIG. 4 can be used to configure a UE via one or more an RRC signal and/or DCI/MAC-CE messages generated by and/or associated with the PUSCH configuration information element.

Additionally or alternatively, the PUSCH configuration element and/or an associated a UE transmission configuration can comprise a number of UE transmission configuration parameters that can be indicated by a particular DCI message bit field associated with one or more antenna port(s) related to the UE. For example, the UE transmission configuration parameters can comprise information such as the number of DMRS CDM group(s) without data, various available DMRS port indexes, and/or an associated number of front-load symbols (e.g., OFDM symbols). For example, the value associated with a UE transmission configuration parameter *dmrs-Type* dictates the DMRS configuration type (e.g., DMRS configuration Type-1 or Type-2) to be used by the UE. Similarly, the value associated with a UE transmission configuration parameter *maxLength* indicates whether the DMRS associated with the UE is configured as a single or a double OFDM symbol DMRS.

Additionally or alternatively, the PUSCH configuration element and/or an associated a UE transmission configuration can comprise one or more PTRS configuration parameters associated with the UE that can be indicated for configuration by the MAC-CE/DCI messages comprise one or more portions of data associated with at least one of DMRS symbol structure information (e.g., whether the DMRS is a single or a double OFDM symbol DMRS), DMRS port allocation information (e.g., DMRS port index and/or identification information), subcarrier frequency information, OFDM symbol allocation information related to the DMRS, OFDM symbol allocation information related to the PTRS, or information indicating whether the apparatus shall be enabled to cause transmission of the PTRS (e.g., a bit-field value indicating that PTRS transmissions shall be enabled known as *ptrs-TD-OCC-Allowed-r18*).

At operation 704 the apparatus 200 is configured to cause transmission of the first indication to the UE.

FIG. 7 illustrates a flowchart diagram depicting a method 700 for improved transmission configurations for PTRSs associated with DMRS ports multiplexed via TD-OCC for a UE in accordance with one or more example embodiments of the present disclosure. The method 700 can be implemented, for example, by one or more components of an apparatus 200. In various embodiments the apparatus 200 can be embodied by a networking element (e.g., a gNB). In various other embodiments, the apparatus 200 can be embodied by a UE 102a. Additionally or alternatively, the apparatus 200 can be embodied by any other particular computing device (e.g., smartphone, laptop, tablet computer, networking device, etc.) associated with a particular communications network. It will be appreciated that the apparatus 200 may be configured to perform the method 700 with the reference to the components of the apparatus 200 again being provided by way of example but not of limitation. As such, the apparatus 200 includes means, such as the processing circuitry 202, at least one processor, communication interface 204, at least one memory device 206, and/or the like, configured to perform the various operations associated with the method 700.

The method 700 begins at operation 702 in which the apparatus 200 is configured to generate a first indication indicating whether a user equipment (UE) is enabled to transmit a phase tracking reference signal (PTRS) associated with a demodulation reference signal (DMRS) port associated with a DMRS, wherein the DMRS port is multiplexed with one or more DMRS ports via time domain orthogonal cover codes (TD-OCC). For example, the apparatus 200 can be configured to generate an indication associated with and/or embodied by a physical uplink shared channel (PUSCH) configuration information element in accordance with one or more example embodiments of the present disclosure. The PUSCH configuration information element is a UE transmission configuration that can be generated and/or transmitted by a network element (e.g., a gNB) and used by a UE to remove, modify, rewrite, and/or otherwise update one or more PTRS configuration parameters associated with the UE.

As depicted in FIG. 4, the PUSCH configuration information element comprises the *ptrs-TD-OCC-Allowed-r18* parameter that indicates to a UE whether the UE is configured (e.g., enabled) to transmit a PTRS associated with a DMRS related to one or more respective DMRS ports. In various embodiments, a PUSCH configuration information element such as the one depicted in FIG. 4 can be used to configure a UE via one or more an RRC signal and/or DCI/MAC-CE messages generated by and/or associated with the PUSCH configuration information element.

Additionally or alternatively, the PUSCH configuration element and/or an associated a UE transmission configuration can comprise a number of UE transmission configuration parameters that can be indicated by a particular DCI message bit field associated with one or more antenna port(s) related to the UE. For example, the UE transmission configuration parameters can comprise information such as the number of DMRS CDM group(s) without data, various available DMRS port indexes, and/or an associated number of front-load symbols (e.g., OFDM symbols). For example, the value associated with a UE transmission configuration parameter *dmrs-Type* dictates the DMRS configuration type (e.g., DMRS configuration Type-1 or Type-2) to be used by the UE. Similarly, the value associated with a UE transmission configuration parameter *maxLength* indicates whether the DMRS associated with the UE is configured as a single or a double OFDM symbol DMRS.

Additionally or alternatively, the PUSCH configuration element and/or an associated a UE transmission configuration can comprise one or more PTRS configuration parameters associated with the UE that can be indicated for configuration by the MAC-CE/DCI messages comprise one or more portions of data associated with at least one of DMRS symbol structure information (e.g., whether the DMRS is a single or a double OFDM symbol DMRS), DMRS port allocation information (e.g., DMRS port index and/or identification information), subcarrier frequency information, OFDM symbol allocation information related to the DMRS, OFDM symbol allocation information related to the PTRS, or information indicating whether the apparatus shall be enabled to cause transmission of the PTRS (e.g., a bit-field value indicating that PTRS transmissions shall be enabled known as *ptrs-TD-OCC-Allowed-r 18).*

At operation 704 the apparatus 200 is configured to cause transmission of the first indication to the UE.

It should be appreciated that the example embodiments described herein are not restricted to the system that is given as an example, such as a 5G system, and that a person skilled in the art may apply the solution to other communication systems. Additionally, although described herein in the context of a UE performing, the method, the method may be performed by other types of apparatus, such as an apparatus associated with and/or in communication with a UE, in accordance with other example embodiments.

Furthermore, implementations of the various techniques described herein may be implemented in digital electronic circuitry, or in computer hardware, firmware, software, or in combinations of them. Implementations may be implemented as a computer program product, e.g., a computer program tangibly embodied in an information carrier, e.g., in a machine-readable storage device or in a propagated signal, for execution by, or to control the operation of, a data processing apparatus, e.g., a programmable processor, a computer, or multiple computers. Implementations may also be provided on a computer readable medium or computer readable storage medium, which may be a non-transitory medium. Implementations of the various techniques may also include implementations provided via transitory signals or media, and/or programs and/or software implementations that are downloadable via the Internet or other network(s), either wired networks and/or wireless networks.

The computer program may be in source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer, or it may be distributed amongst a number of computers.

A computer program, such as the computer program(s) described herein, can be written in any form of programming language, including compiled or interpreted languages, and can be deployed in any form, including as a stand-alone program or as a module, component, subroutine, or other unit or part of it suitable for use in a computing environment. A computer program can be deployed to be executed on one computer or on multiple computers at one site or distributed across multiple sites and interconnected by a communication network.

Method steps may be performed by one or more programmable processors executing a computer program or computer program portions to perform functions by operating on input data and generating output. Method steps also may be performed by, and an apparatus may be implemented as, special purpose logic circuitry, e.g., an FPGA (field programmable gate array) or an ASIC (application-specific integrated circuit).

It will be understood that each block of the flowchart(s) and combination of blocks in the flowchart(s) can be implemented by various means, such as hardware, firmware, processor, circuitry, and/or other communication devices associated with execution of software including one or more computer program instructions. For example, one or more of the procedures described herein can be embodied by computer program instructions. In this regard, the computer program instructions which embody the procedures described herein can be stored, for example, by the memory device 206 of the apparatus 200 or other apparatus employing an embodiment of the present disclosure and executed by the processing circuitry 202. As will be appreciated, any such computer program instructions can be loaded onto a computer or other programmable apparatus (for example, hardware) to produce a machine, such that the resulting computer or other programmable apparatus implements the functions specified in the blocks of the flowchart(s). These computer program instructions can also be stored in a computer-readable memory that can direct a computer or other programmable apparatus to function in a particular manner, such that the instructions stored in the computer-readable memory produce an article of manufacture the execution of which implements the function specified in the blocks of the flowchart(s). The computer program instructions can also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the blocks of the flowchart(s).

Accordingly, blocks of the flowchart(s) support combinations of means for performing the specified functions and combinations of operations for performing the specified functions for performing the specified functions. It will also be understood that one or more blocks of the flowchart(s), and combinations of blocks in the flowchart(s), can be implemented by special purpose hardware-based computer systems which perform the specified functions, or combinations of special purpose hardware and computer instructions.

In some embodiments, certain ones of the operations described herein may be modified or further amplified. Furthermore, in some embodiments, additional optional operations may be included. Modifications, additions, or amplifications to the operations described herein may be performed in any order and in any combination.

Many modifications and other embodiments of the present disclosure set forth herein will come to mind to one skilled in the art to which this disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Although specific terms are employed herein, they are used in a generic and descriptive sense only and not for purposes of limitation.

Aspects and example embodiments are set out in the following numbered paragraphs:
1. An apparatus comprising: at least one processor; and at least one memory including computer program code, the at least one memory and the computer program code configured to, with the at least one processor, cause the apparatus at least to: receive, from a network element, a first indication indicating whether transmission of a phase tracking reference signal (PTRS) associated with a first demodulation reference signal (DMRS) port associated with a first DMRS is enabled in the apparatus, wherein the first DMRS port is multiplexed with one or more DMRS ports via time domain orthogonal cover codes (TD-OCC); determine, based at least in part on the first indication, that the apparatus is enabled to transmit the PTRS; and in response to determining that the apparatus is enabled to transmit the PTRS: cause transmission of the PTRS to the network element.
2. The apparatus of Paragraph 1, wherein the computer program code is configured to further cause the apparatus at least to: determine, based at least in part on the first indication, that the apparatus is not enabled to transmit the PTRS; and in response to determining that the apparatus is not enabled to transmit the PTRS: disable transmission of the PTRS to the network element.
3. The apparatus of any of Paragraphs 1 or 2, wherein the computer program code is configured to further cause the apparatus at least to: receive, from the network element, a second indication indicating whether the apparatus is enabled to transmit the PTRS; determine, based at least in part on the second indication, that the apparatus is enabled to transmit the PTRS; and in response to determining that the apparatus is enabled to transmit the PTRS: cause transmission of the PTRS to the network element.
4. The apparatus of Paragraph 3, wherein the computer program code is configured to further cause the apparatus at least to: determine, based at least in part on the second indication, that the apparatus is not enabled to transmit the PTRS; and in response to determining that the apparatus is not enabled to transmit the PTRS: disable transmission of the PTRS to the network element.
5. The apparatus of any of Paragraphs 1 to 4, wherein the computer program code is configured to further cause the apparatus at least to: determine whether a transmission rank associated with the apparatus satisfies a transmission rank threshold; in response to determining that the transmission rank associated with the apparatus satisfies the transmission rank threshold: transmit, to the network element, capability information related to a respective rank of one or more physical uplink shared channel (PUSCH) transmissions from the apparatus.
6. The apparatus of any of Paragraphs 3 to 5, wherein the PTRS is transmitted via one or more first OFDM symbols, and wherein the DMRS is associated with one or more second OFDM symbols that are different than the one or more first OFDM symbols.
7. The apparatus of any of Paragraphs 3 to 6, wherein the computer program code is configured to further cause the apparatus at least to: update, based at least in part on the first indication, one or more PTRS configuration parameters associated with the apparatus, wherein the one or more PTRS configuration parameters comprise one or more portions of data associated with at least one of DMRS symbol structure information, DMRS port allocation information, subcarrier frequency information, OFDM symbol allocation information related to the DMRS, OFDM symbol allocation information related to the PTRS, or information indicating whether the apparatus is enabled to cause transmission of the PTRS.
8. The apparatus of any of Paragraphs 3 to 7, wherein at least one of the first indication or the second indication are obtained from the network element via at least one of a radio resource control (RRC) signaling message, a medium access control (MAC) control element (CE), or a downlink control information (DCI) message.
9. An apparatus comprising: at least one processor; and at least one memory including computer program code, the at least one memory and the computer program code configured to, with the at least one processor, cause the apparatus at least to: generate a first indication indicating whether transmission of a phase tracking reference signal (PTRS) associated with a demodulation reference signal (DMRS) port associated with a DMRS is enabled for a user equipment (UE), wherein the DMRS port is multiplexed with one or more DMRS ports via time domain orthogonal cover codes (TD-OCC); and cause transmission of the first indication to the UE.
10. The apparatus of Paragraph 9, wherein the computer program code is configured to further cause the apparatus at least to: generate a second indication indicating whether the UE is enabled to transmit the PTRS; and cause transmission of the second indication to the UE.
11. The apparatus of Paragraph 10, wherein at least one of the first indication or the second indication indicate that the UE is enabled to transmit the PTRS.
12. The apparatus of any of Paragraphs 10 or 11, wherein at least one of the first indication or the second indication indicate that the UE is not enabled to transmit the PTRS.
13. The apparatus of any of Paragraphs 10 to 12, wherein at least one of the first indication or the second indication comprise one or more PTRS configuration parameters, and wherein the one or more PTRS configuration parameters comprise one or more portions of data associated with at least one of DMRS symbol structure information, DMRS port allocation information, subcarrier frequency information, OFDM symbol allocation information related to the DMRS, OFDM symbol allocation information related to the PTRS, or information indicating whether the apparatus is enabled to cause transmission of the PTRS.
14. The apparatus of any of Paragraphs 10 to 13, wherein the computer program code is configured to further cause the apparatus at least to: receive capability information related to a respective rank of one or more physical uplink shared channel (PUSCH) transmissions from the UE, wherein the capability information is received in response to a determination that a transmission rank associated with the UE satisfies a transmission rank threshold.
15. An apparatus comprising: at least one processor; and at least one memory including computer program code, the at least one memory and the computer program code configured to, with the at least one processor, cause the apparatus at least to: receive, from a network element, an indication indicating whether transmission of a phase tracking reference signal (PTRS) associated with a first demodulation reference signal (DMRS) port associated with a first DMRS is enabled in the apparatus; determine, based on the indication, a transmission rank associated with the apparatus, wherein the transmission rank is associated with one or more active transmission layers associated with the apparatus, and wherein the one or more active transmission layers are associated with one or more respective antenna ports associated with the apparatus; determine a DMRS configuration type related to the first DMRS; determine whether the first DMRS is associated with a single orthogonal frequency-division multiplexing (OFDM) symbol DMRS structure or a double OFDM symbol DMRS structure; and determine whether the first DMRS port has been multiplexed with one or more DMRS ports via TD-OCC.
16. The apparatus of Paragraph 15, wherein the computer program code is configured to further cause the apparatus at least to; in response to determining that the transmission rank satisfies a predefined transmission rank threshold, in response to determining that the DMRS configuration type is an eType-1 DMRS configuration type or an eType-2 DMRS configuration type, in response to determining that the first DMRS is associated with a single OFDM symbol DMRS structure, and in response to determining that the first DMRS port has not been multiplexed via TD-OCC: cause transmission of the PTRS to the network element.
17. The apparatus of Paragraph 15, wherein the computer program code is configured to further cause the apparatus at least to; in response to determining that the transmission rank satisfies a predefined transmission rank threshold, in response to determining that the DMRS configuration type is a Type-2 DMRS configuration type in response to determining that the first DMRS is associated with a single OFDM symbol DMRS structure, and in response to determining that the first DMRS port has not been multiplexed via TD-OCC: cause transmission of the PTRS to the network element.
18. The apparatus of Paragraph 15, wherein the computer program code is configured to further cause the apparatus at least to: in response to determining that the transmission rank satisfies a predefined transmission rank threshold, in response to determining that the DMRS configuration type is a Type-1 DMRS configuration type or a Type-2 DMRS configuration type, in response to determining that the first DMRS is associated with a double OFDM symbol DMRS structure, and in response to determining that the first DMRS port has not been multiplexed via TD-OCC: cause transmission of the PTRS to the network element.
19. A computer program product comprising at least one non-transitory computer-readable storage medium having computer-executable program code instructions stored therein, the computer-executable program code instructions comprising program code instructions configured to: receive, from a network element, a first indication indicating whether transmission of a phase tracking reference signal (PTRS) associated with a first demodulation reference signal (DMRS) port associated with a first DMRS is enabled for a user equipment (UE), wherein the first DMRS port is multiplexed with one or more DMRS ports via time domain orthogonal cover codes (TD-OCC); determine, based at least in part on the first indication, that the UE is enabled to transmit the PTRS; and in response to determining that the UE is enabled to transmit the PTRS: cause transmission of the PTRS to the network element.
20. The computer program product of Paragraph 19, wherein the computer program code instructions are further configured to: determine, based at least in part on the first indication, that the UE is not enabled to transmit the PTRS; and in response to determining that the UE is not enabled to transmit the PTRS: disable transmission of the PTRS to the network element.
21. The computer program product of any of Paragraphs 19 or 20, wherein the computer program code instructions are further configured to: receive, from the network element, a second indication indicating whether the UE is enabled to transmit the PTRS; determine, based at least in part on the second indication, that the UE is enabled to transmit the PTRS; and in response to determining that the UE is enabled to transmit the PTRS: cause transmission of the PTRS to the network element.
22. The computer program product of Paragraph 21, wherein the computer program code instructions are further configured to: determine, based at least in part on the second indication, that the UE is not enabled to transmit the PTRS; and in response to determining that the UE is not enabled to transmit the PTRS: disable transmission of the PTRS to the network element.
23. The computer program product of any of Paragraphs 19 to 22, wherein the computer program code instructions are further configured to: determine whether a transmission rank associated with the UE satisfies a transmission rank threshold; in response to determining that the transmission rank associated with the UE satisfies the transmission rank threshold: transmit, to the network element, capability information related to a respective rank of one or more physical uplink shared channel (PUSCH) transmissions from the UE.
24. The computer program product of any of Paragraphs 21 to 23, wherein the PTRS is transmitted via one or more first OFDM symbols, and wherein the DMRS is associated with one or more second OFDM symbols that are different than the one or more first OFDM symbols.
25. The computer program product of any of Paragraphs 21 to 24, wherein the computer program code instructions are further configured to: update, based at least in part on the first indication, one or more PTRS configuration parameters associated with the UE, wherein the one or more PTRS configuration parameters comprise one or more portions of data associated with at least one of DMRS symbol structure information, DMRS port allocation information, subcarrier frequency information, OFDM symbol allocation information related to the DMRS, OFDM symbol allocation information related to the PTRS, or information indicating whether the UE is enabled to cause transmission of the PTRS.
26. The computer program product of any of Paragraphs 21 to 25, wherein at least one of the first indication or the second indication are obtained from the network element via at least one of a radio resource control (RRC) signaling message, a medium access control (MAC) control element (CE), or a downlink control information (DCI) message.
27. A computer program product comprising at least one non-transitory computer-readable storage medium having computer-executable program code instructions stored therein, the computer-executable program code instructions comprising program code instructions configured to: generate a first indication indicating whether transmission of a phase tracking reference signal (PTRS) associated with a demodulation reference signal (DMRS) port associated with a DMRS is enabled for a user equipment (UE), wherein the DMRS port is multiplexed with one or more DMRS ports via time domain orthogonal cover codes (TD-OCC); and cause transmission of the first indication to the UE.
28. The computer program product of Paragraph 27, wherein the computer program code instructions are further configured to: generate a second indication indicating whether the UE is enabled to transmit the PTRS; and cause transmission of the second indication to the UE.
29. The computer program product of Paragraph 28, wherein at least one of the first indication or the second indication indicate that the UE is enabled to transmit the PTRS.
30. The computer program product of any of Paragraphs 28 or 29, wherein at least one of the first indication or the second indication indicate that the UE is not enabled to transmit the PTRS.
31. The computer program product of any of Paragraphs 28 to 30, wherein at least one of the first indication or the second indication comprise one or more PTRS configuration parameters, and wherein the one or more PTRS configuration parameters comprise one or more portions of data associated with at least one of DMRS symbol structure information, DMRS port allocation information, subcarrier frequency information, OFDM symbol allocation information related to the DMRS, OFDM symbol allocation information related to the PTRS, or information indicating whether the UE is enabled to cause transmission of the PTRS.
32. The computer program product of any of Paragraphs 28 to 31, wherein the computer program code instructions are further configured to: receive capability information related to a respective rank of one or more physical uplink shared channel (PUSCH) transmissions from the UE, wherein the capability information is received in response to a determination that a transmission rank associated with the UE satisfies a transmission rank threshold.
33. A computer program product comprising at least one non-transitory computer-readable storage medium having computer-executable program code instructions stored therein, the computer-executable program code instructions comprising program code instructions configured to: receive, from a network element, an indication indicating whether transmission of a phase tracking reference signal (PTRS) associated with a first demodulation reference signal (DMRS) port associated with a first DMRS is enabled for a user equipment (UE); determine, based on the indication, a transmission rank associated with the computer program product, wherein the transmission rank is associated with one or more active transmission layers associated with the computer program product, and wherein the one or more active transmission layers are associated with one or more respective antenna ports associated with the computer program product; determine a DMRS configuration type related to the first DMRS; determine whether the first DMRS is associated with a single orthogonal frequency-division multiplexing (OFDM) symbol DMRS structure or a double OFDM symbol DMRS structure; and determine whether the first DMRS port has been multiplexed with one or more DMRS ports via TD-OCC.
34. The computer program product of Paragraph 33, wherein the computer program code instructions are further configured to; in response to determining that the transmission rank satisfies a predefined transmission rank threshold, in response to determining that the DMRS configuration type is an eType-1 DMRS configuration type or an eType-2 DMRS configuration type, in response to determining that the first DMRS is associated with a single OFDM symbol DMRS structure, and in response to determining that the first DMRS port has not been multiplexed via TD-OCC: cause transmission of the PTRS to the network element.
35. The computer program product of Paragraph 33, wherein the computer program code instructions are further configured to; in response to determining that the transmission rank satisfies a predefined transmission rank threshold , in response to determining that the DMRS configuration type is a Type-2 DMRS configuration type in response to determining that the first DMRS is associated with a single OFDM symbol DMRS structure, and in response to determining that the first DMRS port has not been multiplexed via TD-OCC: cause transmission of the PTRS to the network element.
36. The computer program product of Paragraph 33, wherein the computer program code instructions are further configured to: in response to determining that the transmission rank satisfies a predefined transmission rank threshold, in response to determining that the DMRS configuration type is a Type-1 DMRS configuration type or a Type-2 DMRS configuration type, in response to determining that the first DMRS is associated with a double OFDM symbol DMRS structure, and in response to determining that the first DMRS port has not been multiplexed via TD-OCC: cause transmission of the PTRS to the network element.
37. A computer-implemented method, the computer-implemented method comprising: receiving, from a network element, a first indication indicating whether transmission of a phase tracking reference signal (PTRS) associated with a first demodulation reference signal (DMRS) port associated with a first DMRS is enabled for a user equipment (UE), wherein the first DMRS port is multiplexed with one or more DMRS ports via time domain orthogonal cover codes (TD-OCC); determining, based at least in part on the first indication, that the UE is enabled to transmit the PTRS; and in response to determining that the UE is enabled to transmit the PTRS: causing transmission of the PTRS to the network element.
38. The computer-implemented method of Paragraph 37, wherein the computer-implemented method further comprises: determining, based at least in part on the first indication, that the apparatus is not enabled to transmit the PTRS; and in response to determining that the apparatus is not enabled to transmit the PTRS: disabling transmission of the PTRS to the network element.
39. The computer-implemented method of any of Paragraphs 37 or 38, wherein the computer-implemented method further comprises: receiving, from the network element, a second indication indicating whether the apparatus is enabled to transmit the PTRS; determining, based at least in part on the second indication, that the apparatus is enabled to transmit the PTRS; and in response to determining that the apparatus is enabled to transmit the PTRS: causing transmission of the PTRS to the network element.
40. The computer-implemented method of Paragraph 39, wherein the computer-implemented method further comprises: determining, based at least in part on the second indication, that the apparatus is not enabled to transmit the PTRS; and in response to determining that the apparatus is not enabled to transmit the PTRS: disabling transmission of the PTRS to the network element.
41. The computer-implemented method of any of Paragraphs 37 to 40, wherein the computer-implemented method further comprises: determining whether a transmission rank associated with the apparatus satisfies a transmission rank threshold; in response to determining that the transmission rank associated with the apparatus satisfies the transmission rank threshold: transmitting, to the network element, capability information related to a respective rank of one or more physical uplink shared channel (PUSCH) transmissions from the UE.
42. The computer-implemented method of any of Paragraphs 39 to 41, wherein the PTRS is transmitted via one or more first OFDM symbols, and wherein the DMRS is associated with one or more second OFDM symbols that are different than the one or more first OFDM symbols.
43. The computer-implemented method of any of Paragraphs 39 to 42, wherein the computer-implemented method further comprises: updating, based at least in part on the first indication, one or more PTRS configuration parameters associated with the UE, wherein the one or more PTRS configuration parameters comprise one or more portions of data associated with at least one of DMRS symbol structure information, DMRS port allocation information, subcarrier frequency information, OFDM symbol allocation information related to the DMRS, OFDM symbol allocation information related to the PTRS, or information indicating whether the apparatus is enabled to cause transmission of the PTRS.
44. The computer-implemented method of any of Paragraphs 39 to 43, wherein at least one of the first indication or the second indication are obtained from the network element via at least one of a radio resource control (RRC) signaling message, a medium access control (MAC) control element (CE), or a downlink control information (DCI) message.
45. A computer-implemented method, the computer-implemented method comprising: generating a first indication indicating whether transmission of a phase tracking reference signal (PTRS) associated with a demodulation reference signal (DMRS) port associated with a DMRS is enabled for a user equipment (UE), wherein the DMRS port is multiplexed with one or more DMRS ports via time domain orthogonal cover codes (TD-OCC); and causing transmission of the first indication to the UE.
46. The computer-implemented method of Paragraph 45, wherein the computer-implemented method further comprises: generating a second indication indicating whether the UE is enabled to transmit the PTRS; and causing transmission of the second indication to the UE.
47. The computer-implemented method of Paragraph 46, wherein at least one of the first indication or the second indication indicate that the UE is enabled to transmit the PTRS.
48. The computer-implemented method of any of Paragraphs 46 or 47, wherein at least one of the first indication or the second indication indicate that the UE is not enabled to transmit the PTRS.
49. The computer-implemented method of any of Paragraphs 46 to 48, wherein at least one of the first indication or the second indication comprise one or more PTRS configuration parameters, and wherein the one or more PTRS configuration parameters comprise one or more portions of data associated with at least one of DMRS symbol structure information, DMRS port allocation information, subcarrier frequency information, OFDM symbol allocation information related to the DMRS, OFDM symbol allocation information related to the PTRS, or information indicating whether the apparatus is enabled to cause transmission of the PTRS.
50. The computer-implemented method of any of Paragraphs 46 to 49, wherein the computer-implemented method further comprises: receiving capability information related to a respective rank of one or more physical uplink shared channel (PUSCH) transmissions from the UE, wherein the capability information is received in response to a determination that a transmission rank associated with the UE satisfies a transmission rank threshold.
51. A computer-implemented method, the computer-implemented method comprising: receiving, from a network element, an indication indicating whether transmission of a phase tracking reference signal (PTRS) associated with a first demodulation reference signal (DMRS) port associated with a first DMRS is enabled for a user equipment (UE); determining, based on the indication, a transmission rank associated with the UE, wherein the transmission rank is associated with one or more active transmission layers associated with the UE, and wherein the one or more active transmission layers are associated with one or more respective antenna ports associated with the UE; determining a DMRS configuration type related to the first DMRS; determining whether the first DMRS is associated with a single orthogonal frequency-division multiplexing (OFDM) symbol DMRS structure or a double OFDM symbol DMRS structure; and determining whether the first DMRS port has been multiplexed with one or more DMRS ports via TD-OCC.
52. The computer-implemented method of Paragraph 51, wherein the computer-implemented method further comprises; in response to determining that the transmission rank satisfies a predefined transmission rank threshold, in response to determining that the DMRS configuration type is an eType-1 DMRS configuration type or an eType-2 DMRS configuration type, in response to determining that the first DMRS is associated with a single OFDM symbol DMRS structure, and in response to determining that the first DMRS port has not been multiplexed via TD-OCC: causing transmission of the PTRS to the network element.
53. The computer-implemented method of Paragraph 51, wherein the computer-implemented method further comprises; in response to determining that the transmission rank satisfies a predefined transmission rank threshold, in response to determining that the DMRS configuration type is a Type-2 DMRS configuration type in response to determining that the first DMRS is associated with a single OFDM symbol DMRS structure, and in response to determining that the first DMRS port has not been multiplexed via TD-OCC: causing transmission of the PTRS to the network element.
54. The computer-implemented method of Paragraph 51, wherein the computer-implemented method further comprises: in response to determining that the transmission rank satisfies a predefined transmission rank threshold, in response to determining that the DMRS configuration type is a Type-1 DMRS configuration type or a Type-2 DMRS configuration type, in response to determining that the first DMRS is associated with a double OFDM symbol DMRS structure, and in response to determining that the first DMRS port has not been multiplexed via TD-OCC: causing transmission of the PTRS to the network element.
55. An apparatus, the apparatus comprising: means for receiving, from a network element, a first indication indicating whether transmission of a phase tracking reference signal (PTRS) associated with a first demodulation reference signal (DMRS) port associated with a first DMRS is enabled for the apparatus, wherein the first DMRS port is multiplexed with one or more DMRS ports via time domain orthogonal cover codes (TD-OCC);means for determining, based at least in part on the first indication, that the apparatus is enabled to transmit the PTRS; and in response to determining that the apparatus is enabled to transmit the PTRS: means for causing transmission of the PTRS to the network element.
56. The apparatus of Paragraph 55, wherein the apparatus further comprises: means for determining, based at least in part on the first indication, that the apparatus is not enabled to transmit the PTRS; and in response to determining that the apparatus is not enabled to transmit the PTRS: means for disabling transmission of the PTRS to the network element.
57. The apparatus of any of Paragraphs 55 or 56, wherein the apparatus further comprises: means for receiving, from the network element, a second indication indicating whether the apparatus is enabled to transmit the PTRS; means for determining, based at least in part on the second indication, that the apparatus is enabled to transmit the PTRS; and in response to determining that the apparatus is enabled to transmit the PTRS: means for causing transmission of the PTRS to the network element.
58. The apparatus of Paragraph 57, wherein the apparatus further comprises: means for determining, based at least in part on the second indication, that the apparatus is not enabled to transmit the PTRS; and in response to determining that the apparatus is not enabled to transmit the PTRS: means for disabling transmission of the PTRS to the network element.
59. The apparatus of any of Paragraphs 55 to 58 wherein the apparatus further comprises: means for determining whether a transmission rank associated with the apparatus satisfies a transmission rank threshold; in response to determining that the transmission rank associated with the apparatus satisfies the transmission rank threshold: means for transmitting, to the network element, capability information related to a respective rank of one or more physical uplink shared channel (PUSCH) transmissions from the apparatus.
60. The apparatus of any of Paragraphs 57 to 59, wherein the PTRS is transmitted via one or more first OFDM symbols, and wherein the DMRS is associated with one or more second OFDM symbols that are different than the one or more first OFDM symbols.
61. The apparatus of any of Paragraphs 57 to 60, wherein the apparatus further comprises:
   means for updating, based at least in part on the first indication, one or more PTRS configuration parameters associated with the apparatus, wherein the one or more PTRS configuration parameters comprise one or more portions of data associated with at least one of DMRS symbol structure information, DMRS port allocation information, subcarrier frequency information, OFDM symbol allocation information related to the DMRS, OFDM symbol allocation information related to the PTRS, or information indicating whether the apparatus is enabled to cause transmission of the PTRS.
62. The apparatus of any of Paragraphs 57 to 61, wherein at least one of the first indication or the second indication are obtained from the network element via at least one of a radio resource control (RRC) signaling message, a medium access control (MAC) control element (CE), or a downlink control information (DCI) message.
63. An apparatus, the apparatus comprising: means for generating a first indication indicating whether transmission of a phase tracking reference signal (PTRS) associated with a demodulation reference signal (DMRS) port associated with a DMRS is enabled for a user equipment (UE), wherein the DMRS port is multiplexed with one or more DMRS ports via time domain orthogonal cover codes (TD-OCC); and means for causing transmission of the first indication to the UE.
64. The apparatus of Paragraph 63, wherein the apparatus further comprises: means for generating a second indication indicating whether the UE is enabled to transmit the PTRS; and means for causing transmission of the second indication to the UE.
65. The apparatus of Paragraph 64, wherein at least one of the first indication or the second indication indicate that the UE is enabled to transmit the PTRS.
66. The apparatus of any of Paragraphs 64 or 65, wherein at least one of the first indication or the second indication indicate that the UE is not enabled to transmit the PTRS.
67. The apparatus of any of Paragraphs 64 to 66, wherein at least one of the first indication or the second indication comprise one or more PTRS configuration parameters, and wherein the one or more PTRS configuration parameters comprise one or more portions of data associated with at least one of DMRS symbol structure information, DMRS port allocation information, subcarrier frequency information, OFDM symbol allocation information related to the DMRS, OFDM symbol allocation information related to the PTRS, or information indicating whether the apparatus is enabled to cause transmission of the PTRS.
68. The apparatus of any of Paragraphs 64 to 67, wherein the apparatus further comprises: means for receiving capability information related to a respective rank of one or more physical uplink shared channel (PUSCH) transmissions from the UE, wherein the capability information is received in response to a determination that a transmission rank associated with the UE satisfies a transmission rank threshold.
69. An apparatus, the apparatus comprising: means for receiving, from a network element, an indication indicating whether transmission of a phase tracking reference signal (PTRS) associated with a first demodulation reference signal (DMRS) port associated with a first DMRS is enabled for the apparatus; means for determining, based on the indication, a transmission rank associated with the apparatus, wherein the transmission rank is associated with one or more active transmission layers associated with the apparatus, and wherein the one or more active transmission layers are associated with one or more respective antenna ports associated with the UE; means for determining a DMRS configuration type related to the first DMRS; means for determining whether the first DMRS is associated with a single orthogonal frequency-division multiplexing (OFDM) symbol DMRS structure or a double OFDM symbol DMRS structure; and means for determining whether the first DMRS port has been multiplexed with one or more DMRS ports via TD-OCC.
70. The apparatus of Paragraph 69, wherein the apparatus further comprises; in response to determining that the transmission rank satisfies a predefined transmission rank threshold, in response to determining that the DMRS configuration type is an eType-1 DMRS configuration type or an eType-2 DMRS configuration type, in response to determining that the first DMRS is associated with a single OFDM symbol DMRS structure, and in response to determining that the first DMRS port has not been multiplexed via TD-OCC: means for causing transmission of the PTRS to the network element.
71. The apparatus of Paragraph 69, wherein the apparatus further comprises; in response to determining that the transmission rank satisfies a predefined transmission rank threshold, in response to determining that the DMRS configuration type is a Type-2 DMRS configuration type in response to determining that the first DMRS is associated with a single OFDM symbol DMRS structure, and in response to determining that the first DMRS port has not been multiplexed via TD-OCC: means for causing transmission of the PTRS to the network element.
72. The apparatus of Paragraph 69, wherein the apparatus further comprises: in response to determining that the transmission rank satisfies a predefined transmission rank threshold, in response to determining that the DMRS configuration type is a Type-1 DMRS configuration type or a Type-2 DMRS configuration type, in response to determining that the first DMRS is associated with a double OFDM symbol DMRS structure, and in response to determining that the first DMRS port has not been multiplexed via TD-OCC: means for causing transmission of the PTRS to the network element.

## Claims

1. An apparatus comprising:
at least one processor; and
at least one memory including computer program code, the at least one memory and the computer program code configured to, with the at least one processor, cause the apparatus at least to:
receive, from a network element, a first indication indicating whether transmission of a phase tracking reference signal, PTRS, associated with a first demodulation reference signal, DMRS, port associated with a first DMRS is enabled in the apparatus, wherein the first DMRS port is multiplexed with one or more DMRS ports via time domain orthogonal cover codes, TD-OCC;
determine, based at least in part on the first indication, that the apparatus is enabled to transmit the PTRS; and
in response to determining that the apparatus is enabled to transmit the PTRS:
cause transmission of the PTRS to the network element.

2. The apparatus of Claim 1, wherein the computer program code is configured to further cause the apparatus at least to:
determine, based at least in part on the first indication, that the apparatus is not enabled to transmit the PTRS; and
in response to determining that the apparatus is not enabled to transmit the PTRS:
disable transmission of the PTRS to the network element.

3. The apparatus of any of Claims 1 or 2, wherein the computer program code is configured to further cause the apparatus at least to:
receive, from the network element, a second indication indicating whether the apparatus is enabled to transmit the PTRS;
determine, based at least in part on the second indication, that the apparatus is enabled to transmit the PTRS; and
in response to determining that the apparatus is enabled to transmit the PTRS:
cause transmission of the PTRS to the network element.

4. The apparatus of Claim 3, wherein the computer program code is configured to further cause the apparatus at least to:
determine, based at least in part on the second indication, that the apparatus is not enabled to transmit the PTRS; and
in response to determining that the apparatus is not enabled to transmit the PTRS:
disable transmission of the PTRS to the network element.

5. The apparatus of any of Claims 1 to 4, wherein the computer program code is configured to further cause the apparatus at least to:
determine whether a transmission rank associated with the apparatus satisfies a transmission rank threshold;
in response to determining that the transmission rank associated with the apparatus satisfies the transmission rank threshold:
transmit, to the network element, capability information related to a respective rank of one or more physical uplink shared channel, PUSCH, transmissions from the apparatus.

6. The apparatus of any of Claims 3 to 5, wherein the PTRS is transmitted via one or more first OFDM symbols, and wherein the DMRS is associated with one or more second OFDM symbols that are different than the one or more first OFDM symbols.

7. The apparatus of any of Claims 3 to 6, wherein the computer program code is configured to further cause the apparatus at least to:
update, based at least in part on the first indication, one or more PTRS configuration parameters associated with the apparatus,
wherein the one or more PTRS configuration parameters comprise one or more portions of data associated with at least one of DMRS symbol structure information, DMRS port allocation information, subcarrier frequency information, OFDM symbol allocation information related to the DMRS, OFDM symbol allocation information related to the PTRS, or information indicating whether the apparatus is enabled to cause transmission of the PTRS.

8. The apparatus of any of Claims 3 to 7, wherein at least one of the first indication or the second indication are obtained from the network element via at least one of a radio resource control, RRC, signaling message, a medium access control, MAC, control element, CE, or a downlink control information, DCI, message.

9. An apparatus comprising:
at least one processor; and
at least one memory including computer program code, the at least one memory and the computer program code configured to, with the at least one processor, cause the apparatus at least to:
generate a first indication indicating whether transmission of a phase tracking reference signal, PTRS, associated with a demodulation reference signal, DMRS, port associated with a DMRS is enabled for a user equipment, UE, wherein the DMRS port is multiplexed with one or more DMRS ports via time domain orthogonal cover codes, TD-OCC; and
cause transmission of the first indication to the UE.

10. The apparatus of Claim 9, wherein the computer program code is configured to further cause the apparatus at least to:
generate a second indication indicating whether the UE is enabled to transmit the PTRS; and cause transmission of the second indication to the UE.

11. The apparatus of Claim 10, wherein at least one of the first indication or the second indication indicate that the UE is enabled to transmit the PTRS, and preferably at least one of the following:
wherein at least one of the first indication or the second indication indicate that the UE is not enabled to transmit the PTRS;
wherein at least one of the first indication or the second indication comprise one or more PTRS configuration parameters, and
wherein the one or more PTRS configuration parameters comprise one or more portions of data associated with at least one of DMRS symbol structure information, DMRS port allocation information, subcarrier frequency information, OFDM symbol allocation information related to the DMRS, OFDM symbol allocation information related to the PTRS, or information indicating whether the apparatus is enabled to cause transmission of the PTRS; or
wherein the computer program code is configured to further cause the apparatus at least to: receive capability information related to a respective rank of one or more physical uplink shared channel, PUSCH, transmissions from the UE, wherein the capability information is received in response to a determination that a transmission rank associated with the UE satisfies a transmission rank threshold.

12. An apparatus comprising:
at least one processor; and
at least one memory including computer program code, the at least one memory and the computer program code configured to, with the at least one processor, cause the apparatus at least to:
receive, from a network element, an indication indicating whether transmission of a phase tracking reference signal, PTRS, associated with a first demodulation reference signal, DMRS, port associated with a first DMRS is enabled in the apparatus;
determine, based on the indication, a transmission rank associated with the apparatus, wherein the transmission rank is associated with one or more active transmission layers associated with the apparatus, and wherein the one or more active transmission layers are associated with one or more respective antenna ports associated with the apparatus;
determine a DMRS configuration type related to the first DMRS;
determine whether the first DMRS is associated with a single orthogonal frequency-division multiplexing, OFDM, symbol DMRS structure or a double OFDM symbol DMRS structure; and
determine whether the first DMRS port has been multiplexed with one or more DMRS ports via TD-OCC.

13. A computer-implemented method, the computer-implemented method comprising:
receiving, from a network element, a first indication indicating whether transmission of a phase tracking reference signal, PTRS, associated with a first demodulation reference signal, DMRS, port associated with a first DMRS is enabled for a user equipment, UE, wherein the first DMRS port is multiplexed with one or more DMRS ports via time domain orthogonal cover codes, TD-OCC;
determining, based at least in part on the first indication, that the UE is enabled to transmit the PTRS; and
in response to determining that the UE is enabled to transmit the PTRS:
causing transmission of the PTRS to the network element.

14. A computer-implemented method, the computer-implemented method comprising:
generating a first indication indicating whether transmission of a phase tracking reference signal, PTRS, associated with a demodulation reference signal, DMRS, port associated with a DMRS is enabled for a user equipment, UE, wherein the DMRS port is multiplexed with one or more DMRS ports via time domain orthogonal cover codes, TD-OCC; and
causing transmission of the first indication to the UE.

15. A computer-implemented method, the computer-implemented method comprising:
receiving, from a network element, an indication indicating whether transmission of a phase tracking reference signal, PTRS, associated with a first demodulation reference signal, DMRS, port associated with a first DMRS is enabled for a user equipment, UE;
determining, based on the indication, a transmission rank associated with the UE, wherein the transmission rank is associated with one or more active transmission layers associated with the UE, and wherein the one or more active transmission layers are associated with one or more respective antenna ports associated with the UE;
determining a DMRS configuration type related to the first DMRS;
determining whether the first DMRS is associated with a single orthogonal frequency-division multiplexing, OFDM, symbol DMRS structure or a double OFDM symbol DMRS structure; and
determining whether the first DMRS port has been multiplexed with one or more DMRS ports via TD-OCC.
